(19)

**Europäisches Patentamt**

**European Patent Office**

**Office européen des brevets**

(11) **EP 4 637 162 A1**

(12) **EUROPEAN PATENT APPLICATION**

(43) Date of publication:
**22.10.2025 Bulletin 2025/43**

(21) Application number: **24315182.6**

(22) Date of filing: **16.04.2024**

(51) International Patent Classification (IPC):
*H04N 21/2343* $^{(2011.01)}$    *H04N 21/443* $^{(2011.01)}$
*H04N 21/6379* $^{(2011.01)}$    *H04N 21/84* $^{(2011.01)}$

(52) Cooperative Patent Classification (CPC):
**H04N 21/2343; H04N 21/4436; H04N 21/6379;
H04N 21/84**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **InterDigital CE Patent Holdings, SAS**
**75017 Paris (FR)**

(72) Inventors:
• **Aumont, Franck**
**35770 VERN SUR SEICHE (FR)**

• **Le Meur, Olivier**
**35160 TALENSAC (FR)**
• **Demarty, Claire-Helene**
**35520 MONTREUIL LE GAST (FR)**
• **Reinhard, Erik**
**35630 HEDE-BAZOUGES (FR)**
• **Blonde, Laurent**
**35235 THORIGNE-FOUILLARD (FR)**

(74) Representative: **Interdigital**
**Immeuble ZEN 2**
**845 A, avenue des Champs Blancs**
**35510 Cesson-Sévigné (FR)**

(54) **VISUAL CONTENT ENERGY REDUCTION BASED ON ATTENUATION MAP USING INTERACTIVE GREEN MPEG METADATA**

(57)    An interactive exchange of messages between a receiver and a transmitter allows the use of an attenuation map for reducing the energy consumption by modifying the pixel values of the image. Parameters related to the attenuation map are provided by the receiver through a display power reduction request message. Parameters comprise at least an energy reduction rate or a quality reduction rate, a quality metric and may also comprise parameters describing the receiver capabilities. In response to this message, the transmitter generates an attenuation map accordingly and provides it to the receiver, with an encoded image and a second set of parameters. Encoding and decoding methods and devices are described.

Figure 4

EP 4 637 162 A1

**Description**

**TECHNICAL FIELD**

The disclosure is in the field of video compression, and at least one embodiment relates more specifically to encoding and decoding a video comprising attenuation map information and corresponding parameters carried through interactive green MPEG metadata syntax elements, the application of the attenuation map allowing a reduction of the energy consumption when using the video, for example when rendering it on a display.

**BACKGROUND ART**

Reducing energy consumption of electronic devices has become a requirement not only for manufacturers of electronic devices but also to limit, as much as possible, the environmental impact and to contribute to the emergence of a sustainable display industry. The increase in display resolution from SD to HD, then to 4K and soon to 8K and beyond, as well as the introduction of high dynamic range imaging, has brought about a corresponding increase in energy requirements of display devices. This is not consistent with the global need to reduce energy consumption knowing that a huge number of devices has a display (i.e., TV, Mobile phones, tablets, etc.). Indeed, displays are the most important source of energy consumption, for consumer electronic devices, either battery-powered (e.g., smartphones, tablets, head-mounted displays, car display screens) or not (e.g., television sets, advertisement display panels).

Different display technologies have been developed in the recent years. Although modem displays consume energy in a more controllable and efficient manner than older displays, they remain the most important source of energy consumption in a video chain.

As far as backlight displays are concerned, their energy consumption is largely determined by the intensity of the backlight.

Organic Light Emitting Diode (OLED) is one example of display technology that is finding increasingly widespread use because of numerous advantages compared to former technologies such as Thin-Film Transistor Liquid Crystal Displays (TFT-LCDs). Rather than using a uniform backlight, OLED displays, as well as mini LEDS, are composed of individual directly emissive image pixels. OLEDs power consumption is therefore highly correlated to the image content and the power consumption for a given input image can be estimated by considering the values of the displayed image pixels. Although OLED displays consume energy in a more controllable and efficient manner, they are still the most important source of energy consumption in the video chain.

The ISO/IEC 23001-11 specification already specifies specific metadata, so-called Green Metadata, that enables the reduction of energy usage during media consumption, specifically at the display side. The metadata for display adaptation as defined in this specification are designed for a specific display and are particularly well tailored to transmissive display technologies embedding backlight illumination such as LCD displays. These metadata are designed to attain display energy reductions by using display adaptation techniques. They are composed of metrics made of RGB-component statistics and quality indicators of the video content. They can be used to perform RGB picture components rescaling to set the best compromise between backlight/voltage reduction and picture quality. This specification is herein called Green metadata specification.

The Green metadata specification currently defines two types of metadata that are described in the SEI (supplemental enhancement information) message thanks to the metadata element "green_metadata_type". If "green_metadata_type" is 0, then complexity metrics are present. If "green_metadata_type" is 1, then metadata enabling quality recovery after low-power encoding is present. Other values of "green_metadata_type" are reserved for future use by ISO/IEC. Since the ISO/IEC 23001-11 document was published new emissive technologies have been introduced with the spread of emissive OLED displays, which allow a pixel-wise and more efficient control of their energy consumption, and consequently, reduction.

If the metadata already defined in the standard convey information for reduction of the energy consumed by displays, they also have the following drawbacks. First, they are tailored for backlit display technologies and therefore convey global information on statistics derived from the input content, and do not provide any information related to a pixel-wise attenuation map. Second, such global information is far from optimal when applied to more controllable directly emissive displays, for which it would be possible to apply energy reduction at the pixel level, allowing more precise control both on the energy reduction and quality of experience.

A User data SEI message, as defined by ITU-T Recommendation T.35 (ISO/IEC FDIS 23002-7 Information technology - MPEG video technologies - Part 7: Versatile supplemental enhancement information messages for coded video bitstreams), in combination with ISO/IEC 14496-10 for AVC or ISO/IEC DIS 23008-2 for HEVC or ISO/IEC FDIS 23002-7 for VVC allows to convey extra information, which can be received in accurate synchronization with the related audio and video content. Some of the metadata conventionally carried over SEI messages defined by the T.35 recommendation could be related to display adaptation.

## SUMMARY

In general, at least one example of an embodiment is related to an interactive exchange of messages between a receiver and a transmitter that allows the use of an attenuation map for reducing the energy consumption by modifying the pixel values of the image. Parameters related to the attenuation map are provided by the receiver through a display power reduction request message. Parameters comprise at least an energy reduction rate or a quality reduction rate and may also comprise parameters describing the receiver capabilities. In response to this message, the transmitter generates an attenuation map accordingly and provides it to the receiver, with an encoded image and a second set of parameters.

A first aspect is directed to a method comprising obtaining an energy reduction event, transmitting a display power reduction request message comprising at least an energy reduction rate or quality reduction rate corresponding to the energy reduction event, obtaining a display power reduction response message acknowledging the request, obtaining encoded data comprising at least an image, an attenuation map and a set of parameters, reducing values of components of the image by decoding the image and applying the attenuation map to the decoded image based on the set of parameters, and providing the modified image, wherein the display power reduction request message, the display power reduction response message and the set of parameters are formatted according to a MPEG green metadata SEI message.

A second aspect is directed to a method comprising obtaining a display power reduction request message comprising a set of parameters, the parameters comprising at least an energy reduction rate or quality reduction rate, obtaining an input image of a video, determining an attenuation map based on the input image according to the obtained energy reduction rate or quality reduction rate, wherein applying the attenuation map to the input image reduces values of components of the input image, transmitting a display power reduction response message to acknowledge the request and generating an encoded video comprising at least the input image, the attenuation map and a second set of parameters, wherein the second set of parameters comprises at least a parameter representative of the energy reduction rate or the quality reduction rate, wherein the display power reduction request message, the display power reduction response message and the set of parameters are formatted according to a MPEG green metadata SEI message.

A third aspect is directed to a device comprising a processor configured to obtain an energy reduction event, transmit a display power reduction request message comprising at least an energy reduction rate or quality reduction rate corresponding to the energy reduction event, obtain a display power reduction response message acknowledging the request, obtaining encoded data comprising at least an image, an attenuation map and a set of parameters, reduce values of components of the image by decoding the image and applying the attenuation map to the decoded image based on the set of parameters, and provide the modified image, wherein the display power reduction request message, the display power reduction response message and the set of parameters are formatted according to a MPEG green metadata SEI message

A fourth aspect is directed to a device comprising a processor configured to obtain a display power reduction request message comprising a set of parameters, the parameters comprising at least an energy reduction rate or quality reduction rate, obtain an input image of a video, determine an attenuation map based on the input image according to the obtained energy reduction rate or quality reduction rate, wherein applying the attenuation map to the input image reduces values of components of the input image, transmit a display power reduction response message to acknowledge the request and generate an encoded video comprising at least the input image, the attenuation map and a second set of parameters, wherein the second set of parameters comprises at least a parameter representative of the energy reduction rate or the quality reduction rate, wherein the display power reduction request message, the display power reduction response message and the set of parameters are formatted according to a MPEG green metadata SEI message

A fifth aspect is directed to a non-transitory computer readable medium containing data content generated according to the second aspect.

A sixth aspect is directed to non-transitory computer readable medium containing comprising instructions which, when the program is executed by a computer, cause the computer to carry out the described embodiments related to the first or the second aspect.

A seventh aspect is directed to a computer program comprising instructions which, when the program is executed by a computer, cause the computer to carry out any of the described embodiments or variants related to the first or the second aspect.

The above presents a simplified summary of the subject matter in order to provide a basic understanding of some aspects of the present disclosure. This summary is not an extensive overview of the subject matter. It is not intended to identify key/critical elements of the embodiments or to delineate the scope of the subject matter. Its sole purpose is to present some concepts of the subject matter in a simplified form as a prelude to the more detailed description provided below.

## BRIEF SUMMARY OF THE DRAWINGS

The present disclosure may be better understood by consideration of the detailed description below in conjunction with the accompanying figures in which:

Figure 1 illustrates a block diagram of a video encoder according to an embodiment.
Figure 2 illustrates a block diagram of a video decoder according to an embodiment.
Figure 3 illustrates a block diagram of an example of a system in which various aspects and embodiments are implemented.
Figure 4 illustrates an example of media distribution system using green metadata comprising a transmitter and a receiver.
Figure 5 illustrates an example of sequence diagram for the interactions between a transmitter and a receiver according to embodiments.
Figure 6 illustrates an example of flowchart of a process for a receiver according to embodiments.
Figure 7 illustrates an example of flowchart of a process for a transmitter according to embodiments.
Figure 8 illustrates flowcharts of two examples of video encoding using attenuation map information according to at least one embodiment.
Figure 9 illustrates a flowchart of an example of video decoding using attenuation map information according to at least one embodiment.

It should be understood that the drawings are for purposes of illustrating examples of various aspects, features and embodiments in accordance with the present disclosure and are not necessarily the only possible configurations. Throughout the various figures, like reference designators refer to the same or similar features.

## DETAILED DESCRIPTION

The present aspects, although describing principles related to particular drafts of VVC (Versatile Video Coding) or to HEVC (High Efficiency Video Coding) specifications, are not limited to VVC or HEVC, and can be applied, for example, to other standards and recommendations, whether pre-existing or future-developed, and extensions of any such standards and recommendations (including VVC and HEVC). Unless indicated otherwise, or technically precluded, the aspects described in this application can be used individually or in combination.

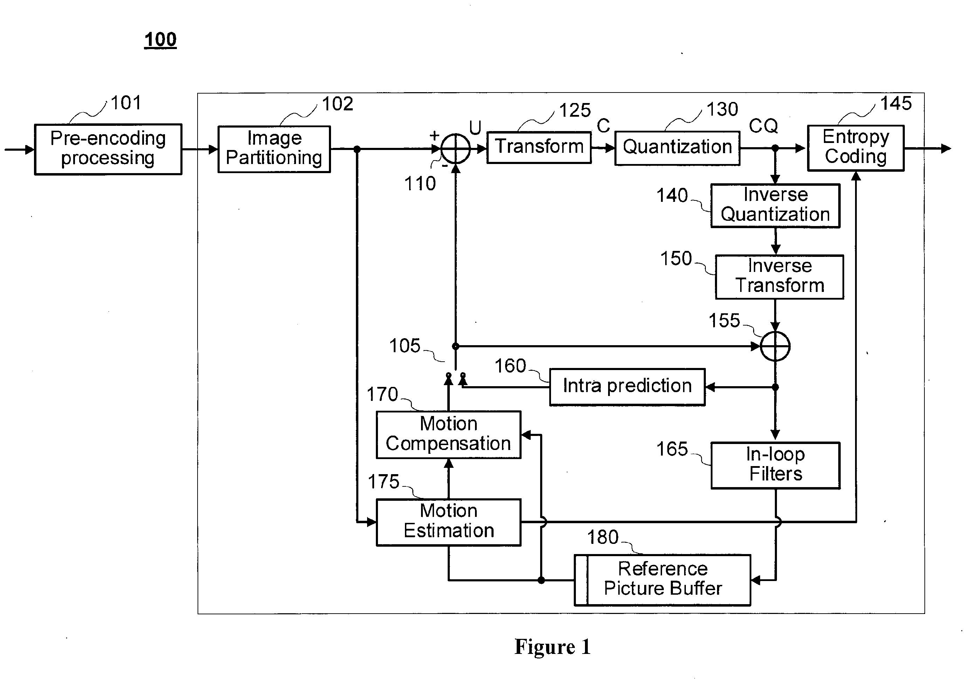

**Figure 1** illustrates a block diagram of a video encoder according to an embodiment. Variations of this encoder 100 are contemplated, but the encoder 100 is described below for purposes of clarity without describing all expected variations. Before being encoded, the video sequence may go through pre-encoding processing (101), for example, applying a color transform to the input color picture (e.g., conversion from RGB 4:4:4 to YCbCr 4:2:0), or performing a remapping of the input picture components in order to get a signal distribution more resilient to compression (for instance using a histogram equalization of one of the color components). Metadata can be associated with the pre-processing and attached to the bitstream.

In the encoder 100, a picture is encoded by the encoder elements as described below. The picture to be encoded is partitioned (102) and processed in units of, for example, CUs. Each unit is encoded using, for example, either an intra or inter mode. When a unit is encoded in an intra mode, it performs intra prediction (160). In an inter mode, motion estimation (175) and compensation (170) are performed. The encoder decides (105) which one of the intra mode or inter mode to use for encoding the unit, and indicates the intra/inter decision by, for example, a prediction mode flag. Prediction residuals are calculated, for example, by subtracting (110) the predicted block from the original image block.

The prediction residuals are then transformed (125) and quantized (130). The quantized transform coefficients, as well as motion vectors and other syntax elements, are entropy coded (145) to output a bitstream. The encoder can skip the transform and apply quantization directly to the non-transformed residual signal. The encoder can bypass both transform and quantization, i.e., the residual is coded directly without the application of the transform or quantization processes.

The encoder decodes an encoded block to provide a reference for further predictions. The quantized transform coefficients are de-quantized (140) and inverse transformed (150) to decode prediction residuals. Combining (155) the decoded prediction residuals and the predicted block, an image block is reconstructed. In-loop filters (165) are applied to the reconstructed picture to perform, for example, deblocking/SAO (Sample Adaptive Offset), Adaptive Loop-Filter (ALF) filtering to reduce encoding artifacts. The filtered image is stored at a reference picture buffer (180).

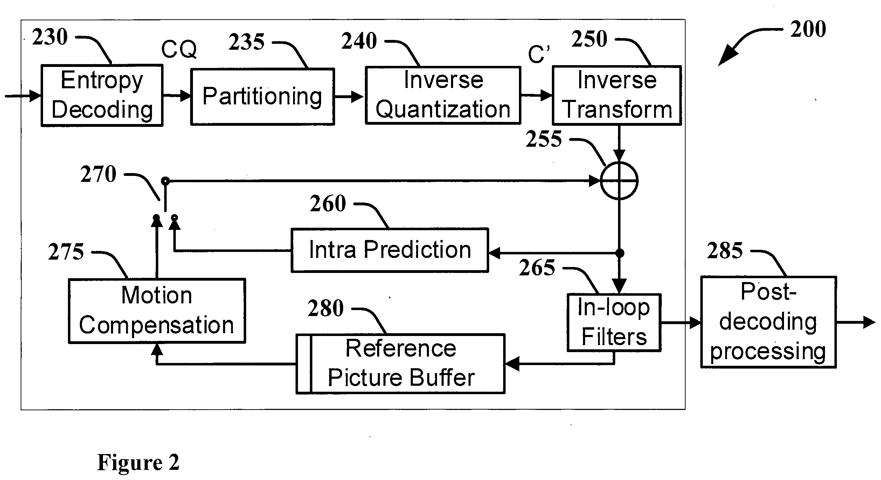

**Figure 2** illustrates a block diagram of a video decoder according to an embodiment. In the decoder 200, a bitstream is decoded by the decoder elements as described below. Video decoder 200 generally performs a decoding pass reciprocal to the encoding pass. The encoder 100 also generally performs video decoding as part of encoding video data. In particular, the input of the decoder includes a video bitstream, which can be generated by video encoder 100. The bitstream is first entropy decoded (230) to obtain transform coefficients, motion vectors, and other coded information. The picture partition information indicates how the picture is partitioned. The decoder may therefore divide (235) the picture according to the decoded picture partitioning information. The transform coefficients are de-quantized (240) and inverse transformed (250) to decode the prediction residuals. Combining (255) the decoded prediction residuals and the predicted block, an image block is reconstructed. The predicted block can be obtained (270) from intra prediction (260) or motion-compensated prediction (i.e., inter prediction) (275). In-loop filters (265) are applied to the reconstructed image. The filtered image is stored at a reference picture buffer (280).

The decoded picture can further go through post-decoding processing (285), for example, an inverse color transform (e.g., conversion from YCbCr 4:2:0 to RGB 4:4:4) or an inverse remapping performing the inverse of the remapping process performed in the pre-encoding processing (101). The post-decoding processing can use metadata derived in the pre-encoding processing and signaled in the bitstream.

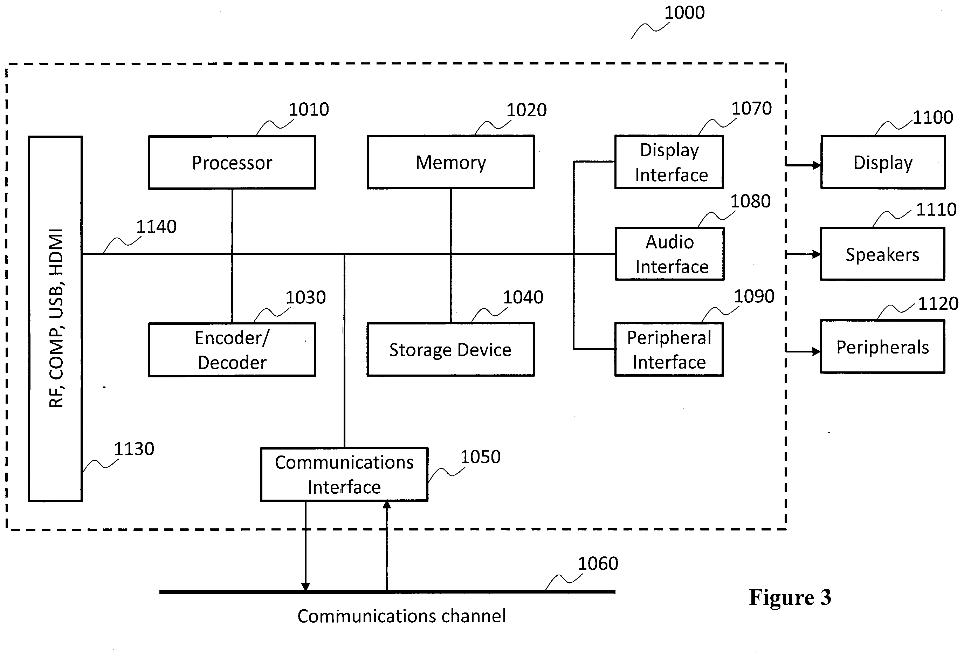

**Figure 3** illustrates a block diagram of an example of a system in which various aspects and embodiments are implemented. System 1000 can be embodied as a device including the various components described below and is configured to perform one or more of the aspects described in this document. Examples of such devices include, but are not limited to, various electronic devices such as personal computers, laptop computers, smartphones, tablet computers, digital multimedia set top boxes, digital television receivers, personal video recording systems, connected home appliances, and servers. Elements of system 1000, singly or in combination, can be embodied in a single integrated circuit (IC), multiple ICs, and/or discrete components. For example, in at least one embodiment, the processing and encoder/decoder elements of system 1000 are distributed across multiple ICs and/or discrete components. In various embodiments, the system 1000 is communicatively coupled to one or more other systems, or other electronic devices, via, for example, a communications bus or through dedicated input and/or output ports. In various embodiments, the system 1000 is configured to implement one or more of the aspects described in this document.

The system 1000 includes at least one processor 1010 configured to execute instructions loaded therein for implementing, for example, the various aspects described in this document. The processor 1010 may be a general-purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Array (FPGAs) circuits, any other type of integrated circuit (IC), a state machine, and the like. The processor 1010 can include embedded memory, input output interface, and various other circuitries as known in the art. The system 1000 includes at least one memory 1020 (e.g., a volatile memory device, and/or a non-volatile memory device). System 1000 includes a storage device 1040, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive. The storage device 1040 can include an internal storage device, an attached storage device (including detachable and non-detachable storage devices), and/or a network accessible storage device, as non-limiting examples.

System 1000 includes an encoder/decoder module 1030 configured, for example, to process data to provide an encoded video or decoded video, and the encoder/decoder module 1030 can include its own processor and memory. The encoder/decoder module 1030 represents module(s) that can be included in a device to perform the encoding and/or decoding functions. As is known, a device can include one or both of the encoding and decoding modules. Additionally, encoder/decoder module 1030 can be implemented as a separate element of system 1000 or can be incorporated within processor 1010 as a combination of hardware and software as known to those skilled in the art.

Program code to be loaded onto processor 1010 or encoder/decoder 1030 to perform the various aspects described in this document can be stored in storage device 1040 and subsequently loaded onto memory 1020 for execution by processor 1010. In accordance with various embodiments, one or more of processor 1010, memory 1020, storage device 1040, and encoder/decoder module 1030 can store one or more of various items during the performance of the processes described in this document. Such stored items can include, but are not limited to, the input video, the decoded video or portions of the decoded video, the bitstream, matrices, variables, and intermediate or final results from the processing of equations, formulas, operations, and operational logic.

In some embodiments, memory inside of the processor 1010 and/or the encoder/decoder module 1030 is used to store instructions and to provide working memory for processing that is needed during encoding or decoding. In other embodiments, however, a memory external to the processing device (for example, the processing device can be either the processor 1010 or the encoder/decoder module 1030) is used for one or more of these functions. The external memory can be the memory 1020 and/or the storage device 1040, for example, a dynamic volatile memory and/or a non-volatile flash memory. In several embodiments, an external non-volatile flash memory is used to store the operating system of, for example, a television. In at least one embodiment, a fast external dynamic volatile memory such as a RAM is used as working memory for video coding and decoding operations, such as for MPEG-2 (MPEG refers to the Moving Picture Experts Group, MPEG-2 is also referred to as ISO/IEC 13818, and 13818-1 is also known as H.222, and 13818-2 is also known as H.262), HEVC (HEVC refers to High Efficiency Video Coding, also known as H.265 and MPEG-H Part 2), or VVC (Versatile Video Coding, a new standard being developed by JVET, the Joint Video Experts Team).

The input to the elements of system 1000 can be provided through various input devices as indicated in block 1130. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High-Definition Multimedia Interface (HDMI) input terminal. Other examples, not shown in Figure 3, include composite video.

In various embodiments, the input devices of block 1130 have associated respective input processing elements as known in the art. For example, the RF portion can be associated with elements suitable for (i) selecting a desired frequency (also referred to as selecting a signal, or band-limiting a signal to a band of frequencies), (ii) downconverting the selected signal, (iii) band-limiting again to a narrower band of frequencies to select (for example) a signal frequency band which can be referred to as a channel in certain embodiments, (iv) demodulating the downconverted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, downconverting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, downconverting, and filtering again to a desired frequency band. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF portion includes an antenna.

Additionally, the USB and/or HDMI terminals can include respective interface processors for connecting system 1000 to other electronic devices across USB and/or HDMI connections. It is to be understood that various aspects of input processing, for example, Reed-Solomon error correction, can be implemented, for example, within a separate input processing IC or within processor 1010 as necessary. Similarly, aspects of USB or HDMI interface processing can be implemented within separate interface ICs or within processor 1010 as necessary. The demodulated, error corrected, and demultiplexed stream is provided to various processing elements, including, for example, processor 1010, and encoder/decoder 1030 operating in combination with the memory and storage elements to process the datastream as necessary for presentation on an output device.

Various elements of system 1000 can be provided within an integrated housing, Within the integrated housing, the various elements can be interconnected and transmit data therebetween using suitable connection arrangement 1140, for example, an internal bus as known in the art, including the Inter-IC (I2C) bus, wiring, and printed circuit boards.

The system 1000 includes communication interface 1050 that enables communication with other devices via communication channel 1060. The communication interface 1050 can include, but is not limited to, a transceiver configured to transmit and to receive data over communication channel 1060. The communication interface 1050 can include, but is not limited to, a modem or network card and the communication channel 1060 can be implemented, for example, within a wired and/or a wireless medium.

Data is streamed, or otherwise provided, to the system 1000, in various embodiments, using a wireless network such as a Wi-Fi network, for example IEEE 802.11 (IEEE refers to the Institute of Electrical and Electronics Engineers). The Wi-Fi signal of these embodiments is received over the communications channel 1060 and the communications interface 1050 which are adapted for Wi-Fi communications. The communications channel 1060 of these embodiments is typically connected to an access point or router that provides access to external networks including the Internet for allowing streaming applications and other over-the-top communications. Other embodiments provide streamed data to the system 1000 using a set-top box that delivers the data over the HDMI connection of the input block 1130. Still other embodiments provide streamed data to the system 1000 using the RF connection of the input block 1130. As indicated above, various embodiments provide data in a non-streaming manner. Additionally, various embodiments use wireless networks other than Wi-Fi, for example a cellular network or a Bluetooth network.

The system 1000 can provide an output signal to various output devices, including a display 1100, speakers 1110, and other peripheral devices 1120. The display 1100 of various embodiments includes one or more of, for example, a touchscreen display, an organic light-emitting diode (OLED) display, a curved display, and/or a foldable display. The display 1100 can be for a television, a tablet, a laptop, a cell phone (mobile phone), or other devices. The display 1100 can also be integrated with other components (for example, as in a smart phone), or separate (for example, an external monitor for a laptop). The other peripheral devices 1120 include, in various examples of embodiments, one or more of a stand-alone digital video disc (or digital versatile disc) (DVR, for both terms), a disk player, a stereo system, and/or a lighting system. Various embodiments use one or more peripheral devices 1120 that provide a function based on the output of the system 1000. For example, a disk player performs the function of playing the output of the system 1000.

In various embodiments, control signals are communicated between the system 1000 and the display 1100, speakers 1110, or other peripheral devices 1120 using signaling such as AV.Link, Consumer Electronics Control (CEC), or other communications protocols that enable device-to-device control with or without user intervention. The output devices can be communicatively coupled to system 1000 via dedicated connections through respective interfaces 1070, 1080, and 1090. Alternatively, the output devices can be connected to system 1000 using the communications channel 1060 via the communications interface 1050. The display 1100 and speakers 1110 can be integrated in a single unit with the other components of system 1000 in an electronic device such as, for example, a television. In various embodiments, the display interface 1070 includes a display driver, such as, for example, a timing controller (T Con) chip.

The display 1100 and speaker 1110 can alternatively be separate from one or more of the other components, for example, if the RF portion of input 1130 is part of a separate set-top box. In various embodiments in which the display 1100 and speakers 1110 are external components, the output signal can be provided via dedicated output connections, including, for example, HDMI ports, USB ports, or COMP outputs.

The embodiments can be carried out by computer software implemented by the processor 1010 or by hardware, or by a combination of hardware and software. As a non-limiting example, the embodiments can be implemented by one or more integrated circuits. The memory 1020 can be of any type appropriate to the technical environment and can be implemented using any appropriate data storage technology, such as optical memory devices, magnetic memory devices, semiconductor-based memory devices, fixed memory, and removable memory, as non-limiting examples. The processor 1010 can be of any type appropriate to the technical environment, and can encompass one or more of microprocessors, general purpose computers, special purpose computers, and processors based on a multi-core architecture, as non-limiting examples.

Implementation of pixel-wise dimming processes of images to reduce the energy are usually done either at the receiver (e.g., post-processing operation) or at the server side (e.g., pre-processing operation), with the consequence of having several limitations and drawbacks.

Part of this processing can be done independently of any information that is provided at the decoder or display side. Therefore, to be further in line with the goal of limiting the impact of the video chain on climate change, embodiments described herein propose to factorize only once the construction of the attenuation map at the encoder side, and to send this map together with the content, in the form of some auxiliary picture, instead of multiplying the processing in each device or server of the transmission chain. In this case, some accompanying metadata are also required in the encoded bitstream, to provide additional information on its use at the receiver side.

Additionally, methods to compute attenuation maps can be costly. In this case, splitting the full process in two steps (e.g., first the computation of the attenuation map at the encoder side, and second, its use at the decoder side) can advantageously enable its use even for devices with low computational resources such as smartphones. Furthermore, some information, such as the display type, is however useful to adapt the application of the attenuation map on the picture to display. This suggests a process in two steps.

If done fully at the receiver or display side, the resulting images after energy reduction will not necessarily respect the content creator's intent because some areas might be impacted by the application of a dimming map created without any control from the content creator and the quality of experience could be degraded. On the other hand, if prepared during the content creation, content creators can assess that the processing is compliant with their quality of experience requirements and indicate areas that should not be affected by the processing.

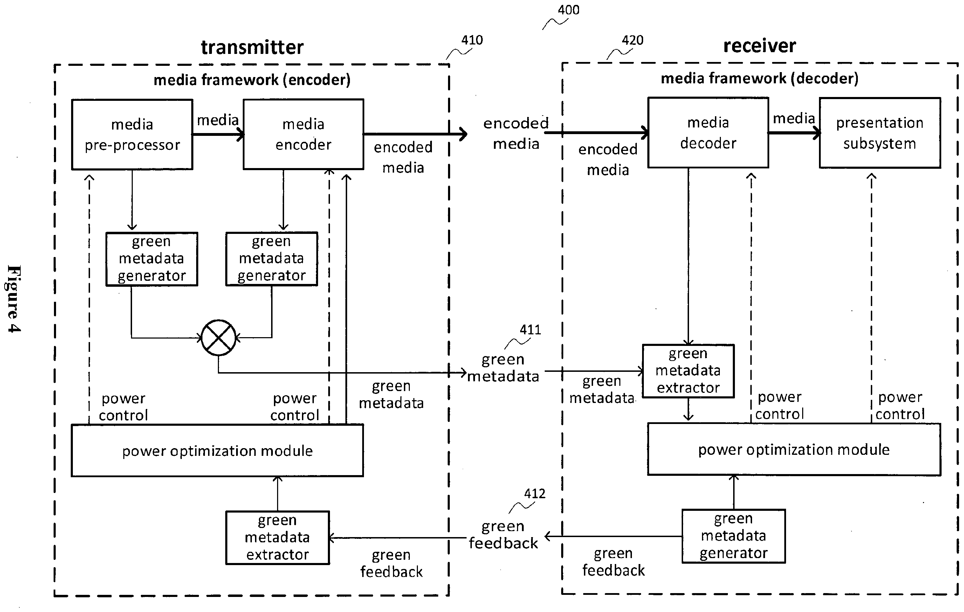

**Figure 4** illustrates an example of media distribution system using green metadata comprising a transmitter and a receiver. Media-based green metadata 411 is generated by the transmitter 410 and provided to the receiver 420, for example based on Green metadata specification (ISO/IEC 23001-11) and carried over a SEI message according to ITU-T Recommendation T.35. Such metadata comprise for example metrics made of RGB component statistics and quality indicators of the video content. These metadata are used by the receiver 420 for display adaptation techniques to reduce the energy consumption, for example to perform RGB components rescaling to set the best compromise between backlight/voltage reduction and picture quality. Table 1 below gives an example of the syntax of the green metadata SEI message in the context of VVC. Such clause describes the payload syntax and semantics if payloadType 56 appears in a VVC NAL unit with nal_unit_type set to PREFIX_SEI_NUT.

Table 1

| green_metadata( payload_size ) { | Descriptor |
|---|---|
| green_metadata_type | u(8) |
| switch ( green_metadata_type ) { | |
| case 0: | |
| period_type | u(4) |
| granularity_type | u(3) |
| extended_representation_flag | u(1) |
| if ( period_type = = 2 ) { | |

(continued)

| | |
|---|---|
| num_seconds | u(16) |
| } | |
| else if ( period_type = = 3 ) { | |
| num_pictures | u(16) |
| ) | |
| if ( granularity_type = = 0 ) { | |
| portion_non_zero_blocks_area | u(8) |
| portion_non_zero_transform_coefficients_area | u(8) |
| portion_intra_predicted_blocks_area | u(8) |
| portion_deblocking_instances | u(8) |
| portion_alf_instances | u(8) |
| if ( extended_representation_flag ) { | |
| if ( portion_non_zero_blocks_area != 0 ) { | |
| portion_non_zero_4_8_16_blocks_area | u(8) |
| portion_non_zero_32_64_128_blocks_area | u(8) |
| portion_non_zero_256_512_1024_blocks_area | u(8) |
| portion_non_zero_2048_4096_blocks_area | u(8) |
| } | |
| if ( portion_intra_predicted_blocks_area < 255 ) { | |
| portion_bi_and_gpm_predicted_blocks_area | u(8) |
| portion_bdof_blocks_area | u(8) |
| } | |
| portion_sao_instances | u(8) |
| } | |
| } | |
| else if( granularity_type <= 3 ) { | |
| max_num_segments_minus1 | u(16) |
| for ( t= 0; t<= max_num_segments_minus 1; t++ ) { | |
| segment _address[ t ] | u(16) |
| portion_non_zero_blocks_area[ t ] | u(8) |
| portion_non_zero_transform_coefficients_area[ t ] | u(8) |
| portion_intra_predicted_blocks_area[ t ] | u(8) |
| portion_deblocking_instances[ t ] | u(8) |
| portion_alf_filtered_blocks[ t ] | u(8) |
| if ( extended_representation_flag ) { | |
| if ( portion_non_zero_blocks_area[ t ] != 0 ) { | |
| portion_non_zero_4_8_16_blocks_area[ t ] | u(8) |
| portion_non_zero_32_64_128_blocks_area[ t ] | u(8) |
| portion_non_zero_256_512_1024_blocks_area[ t ] | u(8) |
| portion_non_zero_2048_4096_blocks_area[ t ] | u(8) |

(continued)

| | |
|---|---|
| } | |
| if ( portion_intra_predicted_blocks_area[ t ] < 255 ) { | |
| portion_bi_predicted_blocks_area[ t ] | u(8) |
| portion_bdof_block_area[ t ] | u(8) |
| } | |
| portion_sao_filtered_blocks[ t ] | u(8) |
| } | |
| } | |
| } | |
| break; | |
| case 1: | |
| xsd_subpic_number_minus1 | u(16) |
| for ( i=0; i<= xsd_subpic_number_minus1; i++ ) { | |
| xsd_subpic_idc[ i ]_ | u(16) |
| xsd_metric_number_minus1[ i ] | u(8) |
| for ( j=0; j<= xsd_metric_number_minus1[ i ]; j++ ) { | |
| xsd_metric_type[ i ][ j ] | u(8) |
| xsd_metric_value[ i ][ j ] | u(16) |
| } | |
| } | |
| break; | |
| default: | |
| } | |
| } | |

In an interactive system 400, green metadata 412 may also be sent back from the receiver to the transmitter to inform the transmitter of receiver information related to backlight configuration parameters. Table 2 illustrates an example of syntax to carry such limitations.

Table 2

| | Descriptor |
|---|---|
| constant_backlight_voltage_time_interval | u(16) |
| max_variation | u(8) |

In addition, the following metadata may be sent from the transmitter to the receiver:

- num_quality_levels indicates the number of quality levels that are enabled by the metadata, excluding the NQLOP (No-Quality-Loss Operating Point).
- lower_bound and upper_bound indicate information on how contrast enhancement is to be performed.
- rgb_component_for_infinite_psnr indicates the largest RGB component in the reconstructed frames.
- max_rgb_component[ i ] indicates the ith quality level, the maximum RGB component that will be retained in the frames, where $1 <= i <= num\_quality\_levels$.
- scaled_psnr_rgb[ i ] indicates the PSNR of ScaledFrames[ i ] relative to the reconstructed frames.

Embodiments described hereafter have been designed with the foregoing in mind and propose to solve these issues by defining an interactive exchange of metadata related to the use of a pixel-wise attenuation map dedicated to the reduction of the energy consumption at the receiver side when using, for example displaying, a visual content. The metadata are specified as syntax elements in an extended Green metadata SEI message and may comprise information such as the expected (target) energy reduction, the expected (target) quality impact, how to use the attenuation map, etc. The pixel-wise attenuation map for one image of the visual content may be carried by any means. In at least one embodiment, the attenuation map is carried as an auxiliary image of a specific type (AUX_ALPHA) conventionally used for alpha blending operations and encoded conventionally. In another embodiment, a new specific type of auxiliary image is defined to carry attenuation maps. In another embodiment, the attenuation map is obtained by other means, for example from a data server through a URL.

Embodiments may be implemented in an encoder such as the encoder 100 of figure 1, a decoder such as the decoder 200 of figure 2, a device such as the device 1000 of figure 3, a transmitter such as the transmitter 410 of figure 4, or a receiver such as the receiver 420 of figure 4.

At least one embodiment describes signaling request mechanisms to enable a display device to control its energy consumption. Such mechanism extends the Green metadata specification (ISO/IEC 23001-11) by adding the capability, for a receiver device such as a display device, to request a transmitter device to create attenuation maps (sometimes named dimming maps) and convey them as auxiliary information. These attenuation maps may be applied to the image to be displayed to reduce its local display-power consumption. This allows to simplify the metadata associated with the attenuation maps since some of the parameters are determined at the request and do not need to appear in the response.

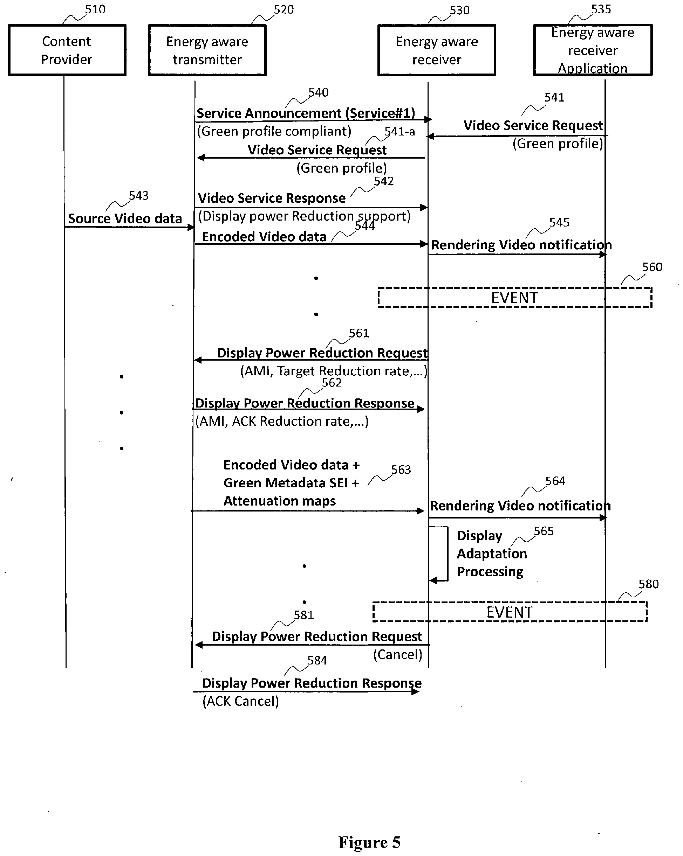

**Figure 5** illustrates an example of sequence diagram for the interactions between a transmitter and a receiver according to embodiments. This diagram shows the messages and data exchanged between a transmitter 520 and a receiver 530 in the context of the system presented in figure 4. The figure also shows a content provider 510 and an application 535 that handles the receiver 530. The first part of the diagram, up to the event 560, describes a conventional (non-energy-aware) operating mode of the system. The second part of the diagram, between the event 560 and the event 580, describes an energy-aware behavior where an energy consumption reduction is performed.

The message 540 provides the service announcement, listing the different (video content) services available to the receiver. For example, the Service #1 is listed as a green profile service. Such profile comprises mechanisms for energy reduction, for example the use of an attenuation map for a display device.

The user selects the Service #1, for example through the user interface of the receiver device. This triggers the Video Service Request 541 (message 541-a is transmitted up to the transmitter) and the Video Service Response 542. The transmitter obtains the source video data 543 from the content provider (or from a local storage caching a plurality of video data) and provides an encoded video data stream 544 corresponding to Service #1 to the receiver.

An event 560 related to display power management occurs. Examples of such event are a low battery level in the case of a portable receiver device, or a user input selecting an energy reduction mode through the user interface of the receiver, or the reception of an information external to the receiver device (i.e., high level of energy consumption of the household, global energy reduction request from energy provider to avoid shortage). In response to such event, the receiver decides to initiate the process of display power reduction (DPR) to reduce its energy consumption.

The receiver sends a DPR request 561 to the transmitter. This request comprises parameters related to energy reduction rate and/or video quality reduction. The syntax for these parameters is further described below. In response to this request, the transmitter provides a DRPR response to acknowledge the receiver's request. This response may comprise some parameters related to the energy reduction process. Then, the transmitter provides an energy-aware version 563 of the video content for Service #1 that comprises the encoded video data, one (or multiple) attenuation map(s) and parameters related to the attenuation map(s). The receiver application is notified through the notification 564 and the display adaptation process 565 is initiated. This process will apply an attenuation map to a decoder picture of the video data, according to the parameters provided to the transmitter and received from the transmitter.

This process may be reiterated for further events 560, for example if the user is not satisfied with the displayed video and wants to change the parameters for decreasing the energy reduction and increasing the quality of the video. Messages 561, 562, 563, 564 are then transmitted with updated parameters corresponding to a new user request and the display adaptation process is performed with these updated parameters.

Another event 580 related to display power management may occur and cancels the energy reduction operation. Examples of such event are when a portable receiver device is plugged onto the mains network, or a user input unselecting an energy reduction mode through the user interface of the receiver, or the reception of an information external to the receiver device (i.e., low level of energy consumption of the household, global energy reduction cancelling request from energy provider). In response to such event, the receiver decides to cancel the process of display power reduction (DPR) and return to the conventional non-energy-aware operating mode, thus displaying the encoded video data according to the data stream 544.

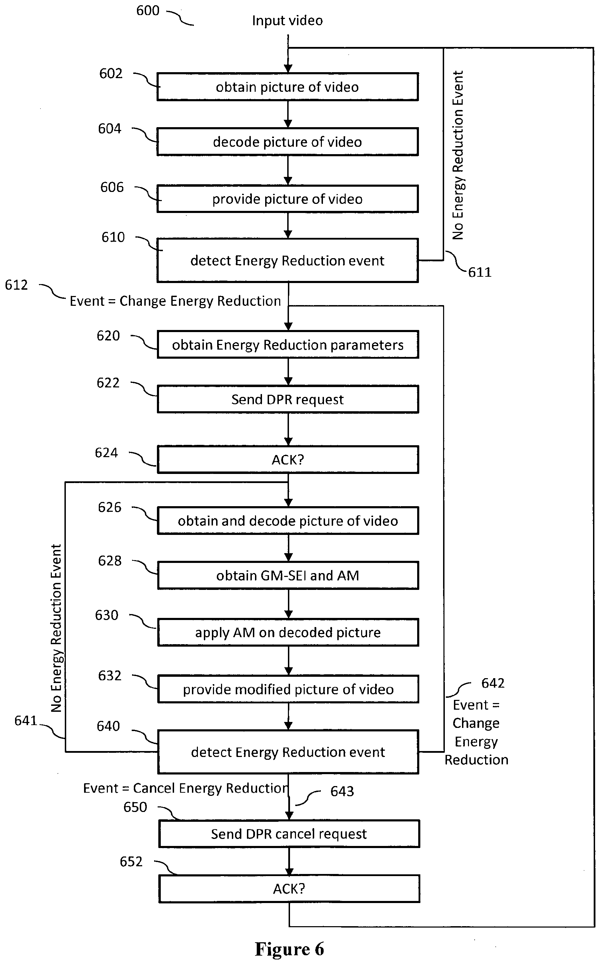

**Figure 6** illustrates an example of flowchart of a process for a receiver according to embodiments. This process 600 is for example implemented by a processor in an decoder such as the decoder 200 of figure 2, a device such as the device 1000 of figure 3, or a receiver such as the receiver 420 of figure 4. With reference to the sequence diagram of figure 5, the steps 602 to 606 correspond to the conventional (non-energy-aware) operating mode while the steps 620 to 640 correspond to the energy-aware operating mode. The syntax for the different messages exchanged is described further below.

In step 602, the processor obtains, for a video stream corresponding to a selected input video such as the Service #1 of figure 5, a picture of the video stream. In step 604, the processor decodes the picture of the video and provides the decode picture in step 606. The steps 602, 604, 606 and 610 are iterated when no energy reduction event occurs (Branch 611).

In the case where an event related to a change in energy reduction occurs, in branch 612, the processor obtains energy reduction and/or quality reduction parameters in step 620. As discussed above, such event occurs for example when a low-level of battery is detected in a mobile receiver device or when the user explicitly enables an energy reduction mode on the receiver device. In step 622, the processor sends a DPR request to the transmitter and waits for an acknowledge message in step 624 in response to this request.

When no acknowledge message is received for a certain timeout, then the processor sends again the same DPR request to the transmitter. After multiple timeouts and re-sends, the processor may notify the application and may decide, for example, to switch to a version of the service without any energy reduction mechanism (steps 602 to 608) or even to stop rendering this service.

In step 626, the processor obtains and decodes a picture of the video stream. In step 628, the processor obtains an attenuation map corresponding to the decoded picture and associated metadata, for example carried by a Green Metadata SEI message, describing how to apply the attenuation map to the picture. Practically, the processor may directly receive the attenuation map and the Green Metadata SEI message before receiving the ACK. In this case, the step 624 is dismissed and the energy reduction process (steps 628, 630, 632) applies directly.

In step 630, the processor applies the attenuation map to the decoder picture and provides the modified picture in step 632, for example for being displayed on a screen or transmitted to another device.

In step 640, the processor checks for a new energy-reduction related event. When no new energy-reduction event is detected, in branch 641, the processor iterates again the process of steps 626 to 632 on the next picture of the video. When an event related to a change in energy reduction occurs, in branch 642, the processor jumps back to step 620 and the whole process of steps 620 to 632 is iterated again. Such event occurs for example when the user changes the level of energy reduction target. They may increase the energy reduction when they find the quality of the picture acceptable, or they may reduce the energy reduction when they find the quality of the picture not acceptable. These events may be related to the type of content. For example, when a movie is interrupted by an advertisement, the user may accept a stronger reduction.

When a cancel energy reduction event is detected in step 640, in branch 643, the processor sends a DPR CANCEL request to the transmitter. This situation corresponds to the case where either the user decides to stop using an energy-reduction operating mode or the system detects a change of operation mode (i.e., a mobile receiver device gets plugged in and is no more operating on its battery). In step 652, the processor waits for an acknowledge (ACK CANCEL) of the cancel request by the transmitter and then jumps back at the beginning of the process in step 602.

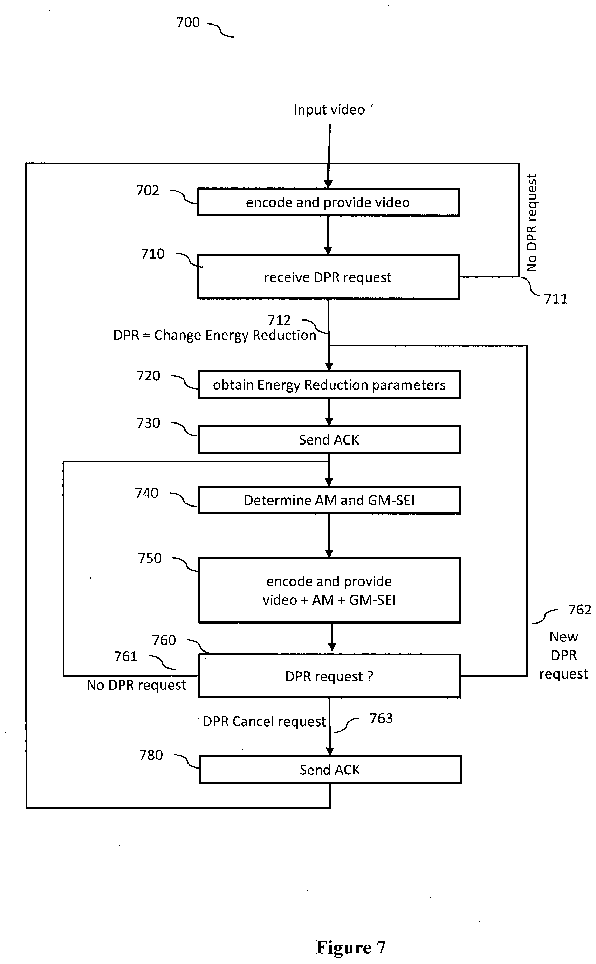

**Figure 7** illustrates an example of flowchart of a process for a transmitter according to embodiments. This process 700 is for example implemented by a processor in a encoder such as the encoder 100 of figure 1, a device such as the device 1000 of figure 3, or a transmitter such as the transmitter 410 of figure 4. The process is operated on an input video. In step 702, the processor encodes a subset of the input video (for example an image or a set of images) and provides it to the receiver. In step 710, the processor checks for the reception of a DPR request from the receiver. In branch 711, when no DPR request is received, the processor iterates again on the steps 702 and 710 for a next subset of the input video.

In branch 712, when a DPR request is received, in step 720, the processor obtains the energy reduction parameters carried by the DPR request message. In step 730, the processor sends an acknowledge of the request. In step 740, the processor determines, for an image of the set of images, a corresponding attenuation map according to the energy reduction parameters and the associated metadata (comprising signaling information), for example carried by a Green Metadata SEI message. In step 750, the processor encodes the image of the set of images, the corresponding attenuation map and the associated metadata and provides them to the receiver. In step 760, the processor checks the reception of a new DPR request. In branch 761, when no new DPR request is received, the processor iterates again on the steps 740 and 750 for a next image, determining a new attenuation map for the next image but still using the same energy reduction parameters. The iteration continues until a message is received to signal a change in the energy reduction operating mode. In branch 762, when a new DPR request is received, the transmitter is informed of new energy reduction parameters. In this case, the processor iterates again on the steps 720 to 760 for the newly received set of energy reduction parameters. In branch 763, when a DPR CANCEL request is received, the transmitter is informed that the received request to exit from the energy reduction operating mode and return to conventional operating mode. In this case, in step 780, the processor sends an acknowledge message (ACK_CANCEL) and jumps back to the step 702 for further iterations with no energy reduction.

Although the decoding and the encoding process of respectively figures 6 and figure 7 have been described as subject to an event related to energy reduction, the same principles apply when the event is related to quality. Typically, a DPR request may also be generated in response to an event (560 in figure 5 and 612, 642 of figure 6) triggered by a user wanting to increase the quality of the video.

The interaction between the transmitter and the receiver is based on messages that use, for example, the Green Metadata SEI message syntax. The interaction is performed by the transmission of a DPR request message from the receiver to the transmitter (messages 561 and 581 of figure 5). The transmitter responds with a DPR response message (messages 562 and 584 in figure 5). The following tables introduce variant embodiments of the syntax for the DPR request and response messages that drive the energy reduction display adaptation. These embodiments are presented from the simplest form of the syntax to the most complex. To keep the description concise, the descriptions for the parameters are not repeated for each of the variant embodiment. Elements of these variants may be combined together to form a further variant. Some elements of these variants can be removed to form further variants.

The DPR request is based on the syntax for the receiver to transmitter messages as specified in the Green Metadata specification.

In at least one embodiment, the DPR request does not comprise any information (i.e., display model, energy reduction rate). In that case, the transmitter uses default parameters to produce the attenuation map and the associated metadata.

In at least one embodiment illustrated in Table 3, the DPR request comprises an indication of the display model that is used and the expected energy reduction rate when applying the received attenuation map on the original image. Thus, the transmitter can generate the corresponding attenuation map for the specified display model at the requested energy reduction rate, insert it in the bitstream and generate the Green Metadata SEI message to indicate how to apply the attenuation map on the original video. Each new request from the receiver cancels any previous request and the transmitter applies the new configuration. The values for the display model are described in Table 4.

Table 3

|  | Descriptor |
|---|---|
| ami_display_model | u(4) |
| ami_energy_reduction_rate | u(8) |

**ami_display_model** is a bit field mask which indicates the display models of the receiver on which the Attenuation Map sample values of the auxiliary picture may be used. The table illustrates the different values for this parameter.

Table 4

| Bit number | Display model |
|---|---|
| 0 | Transmissive pixel |
| 1 | Emissive pixel |
| 2..3 | Reserved for future types |

**ami_energy_reduction_rate** indicates the energy reduction rate the receiver expects when the Dimming or attenuation map is applied on the primary picture. An example unit for the ami_energy_reduction_rate is a percentage or a value in Watts.

In at least one embodiment illustrated in Table 5, in addition to the parameters listed in the previous table, the DPR request also comprises a cancel flag. Once, the receiver wants to cancel an attenuation map for a given energy reduction rate, the ami_cancel_flag is used in combination to the specific reduction rate to be cancelled. When this flag is set to true, the energy-reduction process is disabled for the reduction rate specified by the ami_energy_reduction_rate value. The receiver may cancel all the attenuation maps in a single request by setting the ami_energy_reduction_rate value to '0'. This will disable any energy reduction mechanism. This corresponds to the message 581 of figure 5, to the branch 643 of figure 6 and to the branch 763 of figure 7. When this flag is set to false, the energy-reduction process is enabled and thus the other parameters may be used.

Table 5

|  | Descriptor |
|---|---|
| ami_cancel_flag | u(1) |

(continued)

|  | Descriptor |
| --- | --- |
| ami_display_model | u(4) |
| ami_energy_reduction_rate | u(8) |

By performing successive requests for different reduction rates, several maps corresponding to the different reduction rates can be generated, transmitted and retrieved by the receiver.

In at least one embodiment illustrated in Table 6, the receiver may request multiple reduction rates in a single request. Instead of comprising a single ami_energy_reduction_rate parameter, the DPR request comprises ami_map_number of ami_energy_reduction_rate parameters, each of them is identified by the corresponding index i in the loop.

Table 6

|  | Descriptor |
| --- | --- |
| ami_cancel_flag | u(1) |
| ami_display_model | u(4) |
| ami_map_number | u(3) |
| for (i = 1; i <= ami_map_number; i++) { |  |
|    ami_energy_reduction_rate[ i ] | u(8) |
| } |  |

To cancel the attenuation map for a specific reduction rate, the receiver lists the specific reduction rates to be cancelled and sets the ami_map_number accordingly. The receiver may cancel all the attenuation maps in an optimized single request by setting the ami_map_number value to '0' requiring less data to be transmitted.

**ami_cancel_flag** equal to 1 indicates that the receiver requests to cancel the transmission of the attenuation maps of energy reduction rate listed in the message and the related information in the Green Metadata SEI message.

Replacing a single ami_energy_reduction_rate parameter by a plurality of ami_energy_reduction_rate parameters apply to the DPR request related tables illustrated below and uses the same syntax as in Table 6. It introduces a loop on ami_map_number elements.

In at least one embodiment illustrated in Table 7, in addition to the parameters listed in the previous tables, the DPR request also comprises a parameter named ami_attenuation_use_idc_flags indicating the type of processing supported by the receiver to apply the attenuation map. For example, the attenuation map can be subtracted, added or multiplied to the decoded image, in order to reduce the level of the pixel values. The flag is used to ensure that the map produced by the transmitter can be applied by the receiver. The values for this parameter are described in Table 8.

Table 7

|  | Descriptor |
| --- | --- |
| ami_cancel_flag | u(1) |
| ami_display_model | u(4) |
| ami_attenuation_use_idc_flags | u(8) |
| ami_energy_reduction_rate | u(8) |

**ami_attenuation_use_idc_flags** is a bit field which indicates the type of processing supported by the receiver to apply the attenuation map.

- bit 0 set to 1 indicates that addition is supported
- bit 1 set to 1 indicates that substraction is supported
- bit 2 set to 1 indicates that multiplication is supported
- bit 3..7 are reserved for future processes

Table 8

| Bit number | Process to apply the attenuation map |
|---|---|
| 0 | Addition |
| 1 | Subtraction |
| 2 | Multiplication |
| 4..15 | User defined |

In at least one embodiment illustrated in Table 9, in addition to the parameters listed in the previous tables, the DPR request also comprises a parameter named ami_attenuation_comp_idc_flags indicating on which component(s) of the original image the attenuation map should be applied. When this parameter is not present, by default the attenuation map is only applied to the luminance component. The values for this parameter are described in Table 10.

Table 9

| | Descriptor |
|---|---|
| ami_cancel_flag | u(1) |
| ami_display_model | u(4) |
| ami_attenuation_use_idc_flags | u(8) |
| ami_attenuation_comp_idc_fiags | u(3) |
| ami_energy_reduction_rate | u(8) |

**ami_attenuation_comp_idc_flags** is a bit field on which component(s) of the original image the attenuation map should be applied.

- bit 0 set to 1 indicates that the receiver supports to apply an attenuation map on the luma component of the primary picture.
- bit 1 set to 1 indicates that the receiver supports to receive one component and that this component should be applied to the luma component and the chroma components of the primary picture.
- bit 2 set to 1 indicates that the receiver supports to receive only one component and that this component should be applied to the RGB components (after YUV to RGB conversion) of the primary picture.
- bit 3 set to 1 indicates that the receiver supports to receive two components and that the first component should be applied to the luma component and the second component should be applied to both chroma components of the primary picture.
- bit 4 set to 1 indicates that the receiver supports to receive three components and that these components should be applied respectively to the luma and chroma components of the primary picture.
- bit 5 set to 1 indicates that the receiver supports to receive three components and that these components should be applied respectively to the RGB components (after YUV to RGB conversion) of the primary picture.
- bit 6-7 are reserved for future uses.

Table 10

| bit number | Mapping between components of the Attenuation Map and primary picture components on which to apply the Attenuation Map supported by the receiver |
|---|---|
| 0 | One component of the map applied to the luma component of the primary picture |
| 1 | One component of the map applied to the luma and chroma components of the primary picture |
| 2 | One component in the map applied to the three RGB components of the primary picture |
| 3 | Two components of the map applied as:<br>- First component to luma component<br>- Second component to the chroma components of the primary picture |

(continued)

| bit number | Mapping between components of the Attenuation Map and primary picture components on which to apply the Attenuation Map supported by the receiver |
|---|---|
| 4 | Three components of the map applied to resp. luma and chroma components of the associated primary picture |
| 5 | Three components applied to respectively the RGB components of the associated primary picture |
| 6..7 | Future uses |

In at least one embodiment illustrated in Table 11, the ami_attenuation_comp_idc_flags parameter is replaced by an ami_attenuation_all_comp_idc_flag parameter allowing the receiver to indicate that it supports to apply the attenuation map on the luminance only or on all the components but not individually. When this parameter is set to '0', the receiver indicates that it supports to apply the attenuation map on the luminance only. When this parameter is set to '1', the receiver indicates that it supports to apply the attenuation map on all components only.

Table 11

|  | Descriptor |
|---|---|
| ami_cancel_flag | u(1) |
| ami_display_model | u(4) |
| ami_attenuation_use_idc_flags | u(8) |
| ami_attenuation_all_comp_idc_flag | u(1) |
| ami_energy_reduction_rate | u(8) |

In at least one embodiment illustrated in Table 12, in addition to the parameters listed in the previous tables, the DPR request also comprises a parameter named ami_preprocessing_type_idc_flags indicating the type of preprocessing supported by the receiver. The transmitter considers this information to produce the attenuation maps. The values for this parameter are described in Table 13.

Table 12

|  | Descriptor |
|---|---|
| ami_cancel_flag | u(1) |
| ami_display_model | u(4) |
| ami_attenuation_use_idc_flags | u(8) |
| ami_attenuation_comp_idc_fiags | u(3) |
| ami_preprocessing_type_idc_flags | u(8) |
| ami_energy_reduction_rate | u(8) |

**ami_preprocessing_type_idc_flags** is a bit field which indicates what are the pre-processing on the Attenuation Map supported by the receiver.

- bit 0 set to 1 indicates that the receiver supports pre-processing scaling.
- bit 1 set to 1 indicates that the receiver supports a pre-upsampling bicubic type. This is the default embodiment.
- bit 2 set to 1 indicates that the receiver supports a pre-upsampling bilinear interpolation type.
- bit 3 set to 1 indicates that the receiver supports a pre-upsampling Lanczos interpolation type.
- Bit 4..5 for future pre-processing types

Table 13

| Bit number | Attenuation Map preprocessing type |
|---|---|
| 0 | Scaling pre-processing |
| 1 | Bicubic pre-upsampling |
| 1 | Bilinear pre-upsampling |
| 2 | Lanczos pre-upsampling |
| 4..5 | Reserved for future pre-processing types |

In at least one embodiment illustrated in Table 14, in addition to the parameters listed in the previous tables, the DPR request also comprises a parameter named ami_preprocessing_scale_flags indicating that the receiver supports a scaling preprocessing before applying the attenuation maps. The transmitter considers this information to produce the attenuation maps. When this flag is used, the size of the attenuation map may be downscaled to a smaller size and thus requires less memory to store and less bits to transmit. When this parameter is set to '1', the receiver indicates it supports scaling operations at preprocessing. When this parameter is set to '0', the receiver indicates it does not support any scaling operation at preprocessing. The latter case may be used by devices with limited computing resources.

Table 14

| | Descriptor |
|---|---|
| ami_cancel_flag | u(1) |
| ami_display_model | u(4) |
| ami_attenuation_use_idc_flags | u(8) |
| ami_attenuation_comp_idc_flags | u(3) |
| ami_preprocessing_type_idc_flags | u(8) |
| ami_preprocessing_scale_flag | u(1) |
| ami_energy_reduction_rate . | u(8) |

In at least one embodiment illustrated in Table 15, in addition to the parameters listed in the previous tables, the DPR request also comprises a parameter named ami_map_approximation_model_flags indicating the interpolation models supported by the receiver. This information is used by the transmitter to generate the attenuation maps requested by the receiver. When receiving the maps, the receiver will be able to generate additional maps thanks to the model it supports.

Table 15

| | Descriptor |
|---|---|
| ami_cancel_flag | u(1) |
| ami_display_model | u(4) |
| ami_attenuation_use_idc_flags | u(8) |
| ami_attenuation_comp_idc_flags | u(3) |
| ami_preprocessing_type_idc_flags | u(8) |
| ami_map_approximation_model_flags | u(8) |
| ami_map_number | u(8) |
| for (i = 1; i <= ami_map_number; i++) { | |
| ami_energy_reduction_rate[ i ] | u(8) |
| } | |

**ami_map_approximation_model_flags** is a bit field specifying the models supported by the receiver to extrapolate the set of requested attenuation map with individual energy reduction rates to another set of attenuation maps with a different energy reduction rate. The values for this parameter are described in Table 16. Default value is 1 indicating that at least linear scaling is supported by the receiver.

- bit 0 set to 1 indicates that the linear scaling is supported. This is the default value.
- bit 1 set to 1 indicates that the bilinear interpolation is supported.
- bit 2 set to 1 indicates that Lanczos interpolation is supported.
- bit 3 set to 1 indicates that bicubic interpolation is supported.
- bit 4..7 Reserved for future interpolation models

Table 16

| Bit number | Attenuation Map interpolation process |
|---|---|
| 0 | Linear scaling |
| 1 | Bilinear interpolation |
| 2 | Lanczos interpolation |
| 3 | Bicubic interpolation |
| 4..7 | Reserved for future uses |

In at least one embodiment illustrated in Table 17, in addition to the parameters listed in the previous tables, the DPR request also comprises a parameter named ami_video_quality_reduction representing the quality loss accepted by the receiver. This parameter is expressed as percentage value of reduction of quality according to a selected quality metric ami_video_quaiity_metric in comparison with its nominal value. With this information, the transmitter is able to select the best compromise between the video quality and the energy reduction. The different quality metrics are listed in Table 18.

Table 17

| | Descriptor |
|---|---|
| ami_cancel_flag | u(1) |
| ami_display_model | u(4) |
| ami_attenuation_use_idc_flags | u(8) |
| ami_attenuation_comp_idc_fiags | u(3) |
| ami_preprocessing_type_idc_flags | u(8) |
| ami_map_approximation_model_flags | u(8) |
| ami_video_quality_metric | u(3) |
| ami_map_number | u(8) |
| for (i = 1; i <= ami_map_number; i++) { | |
| ami_video_quality_reduction[ i ] | u(8) |
| ami_energy_reduction_rate [ i ] | u(8) |
| } | |

**ami_video_quality_metric** indicates the quality metric to be considered by the transmitter when considering the loss of quality when performing the balancing between the quality reduction and the energy reduction.

Table 18

| ami_video_quality_metric field value | Metric name |
|---|---|
| 0x00 | PSNR |
| 0x01 | SSIM |

(continued)

| ami_video_quality_metric field value | Metric name |
|---|---|
| 0x02 | wPSNR |
| 0x03 | WS-PSNR |
| 0x04 | V-MAF |
| 0x05..0x07 | Reserved for future metrics |

In response to one the DPR request messages described in the tables presented above, the transmitter provides a response to the receiver in the form of a combination of DPR response message and Green Metadata SEI messages. In at least one embodiment not illustrated, a DPR response message is sent the receiver to acknowledge the Display Adaptation Request, but the transmitter does not provide any information (i.e., no map number or list of energy reduction rates).

In at least one embodiment illustrated in Table 19, the DPR response comprises the list of energy reduction rates accepted by the transmitter.

Table 19

| | Descriptor |
|---|---|
| ami_map_number | u(3) |
| for (i = 1; i <= ami_map_number; i++) { | |
| ami_energy_reduction_rate[ i ] | u(8) |
| } | |

When the request of the receiver is not accepted by the transmitter (i.e., impossible to achieve, not compliant with distribution policies), the transmitter does not generate any attenuation map and signals that by setting the ami_map_number parameter to '0'. In this case, no attenuation map and no green metadata SEI message are transmitted.

In at least one embodiment illustrated in Table 20, in addition to the list of energy reduction rates accepted by the transmitter of Table 19, the DPR response also comprises the corresponding values of video quality reduction. Such value is determined according to the quality metric selected by the receiver and transmitted in the DPR request. However, the quality metric is not transmitted back in the response message.

Table 20

| | Descriptor |
|---|---|
| ami_map_number | u(3) |
| for (i = 1; i <= ami_map_number; i++) { | |
| ami_energy_reduction_rate[ i ] | u(8) |
| ami_video_quality_reduction[ i ] | u(8) |
| } | |

In at least one embodiment not illustrated, the quality metric is transmitted back in the DPR response. The quality metric returned back is preferably the metric requested by the receiver in its DPR request but may also be different. In this case, the receiver may decide to not apply any attenuation map and cancel the initial request to stop the transmission of the attenuation maps and related Green metadata SEI messages.

In at least one embodiment, when a receiver requests to cancel the transmission of all the attenuation maps, the corresponding DPR response message does not comprise any information (i.e., no map number and list of energy reduction rates) or only comprises the ami_map_number parameter set to 0.

In at least one embodiment, when a receiver requests to cancel the transmission of one or several attenuation maps, the DPR response message comprises the ami_map_number parameter, set to the number of the remaining active attenuation maps and their related energy reduction rate.

The information related to the attenuation map are carried in Green Metadata SEI messages. These messages are based on the syntax of Table 1 and add a new green_metadata_type for the elements related to the attenuation maps. The value for this new type is the next available value in the list of green_metadata_type i.e., the value 2 as shown in the example below. In the example illustration of Table 21 and Table 23, the syntax elements corresponding to type 0 and 1 have been omitted and replaced by "..." for the sake of readability. Unless otherwise specified, the parameters of these tables use the same syntax as defined for the DPR request.

Table 21

| green_metadata( payload_size ) { | Descriptor |
|---|---|
| green_metadata_type | u(8) |
| switch ( green_metadata_type ) { | |
| case 0: | |
| ... | |
| break; | |
| case 1: | |
| ... | |
| break; | |
| case 2: | |
| ami_cancel_flag | u(1) |
| if ( !ami_cancel_flag ) { | |
| ami_display_model | u(4) |
| ami_global_flag | u(1) |
| ami_map_approximation_model | u(4) |
| ami_box_xstart | u(8) |
| ami_box_ystart | u(8) |
| ami_box_width | u(8) |
| ami_box_height | u(8) |
| ami_map_number | u(4) |
| for ( i=0;i<ami_map_number;i++ ) { | |
| ami_layer_id[ i ] | u(8) |
| ami_ols_number[ i ] | u(4) |
| for ( j=0;j<ami_ols_number[i];j++) { | |
| ami_ols_id[ i ][ j ] | u(8) |
| } | |
| ami_comp_number[ i ] | u(4) |
| for ( j=0;j<ami_com_number[ i ];j++) { | |
| ami_comp_idc[ i ][ j ] | u(8) |
| } | |
| ami_energy_reduction_rate[ i ] | u(8) |
| ami_video_quality[ i ] | u(8) |
| ami_max_value[ i ] | u(16) |
| if ( !ami_global_flag ) or ( i ==0 ) { | |
| ami_attenuation_use_idc[ i ] | u(4) |
| ami_attenuation_comp_idc[ i ] | u(4) |

(continued)

| | |
|---|---|
| ami_preprocessing_flag[ i ] | u(1) |
| if( ami_preprocessing_flag[ i ] ) { | |
| ami_preprocessing_type_idc[ i ] | u(2) |
| } | |
| ami_preprocessing_scale[ i ] | u(8) |
| } | |
| } | |
| } | |
| break; | |
| default: | |
| ) | |
| } | |

The ami_box_xstart, ami_box_ystart, ami_box_width, ami_box_height information define respectively the x coordinate, y coordinate, width and height of a bounding box defining the region of the decoded picture to apply the attenuation map. The attenuation map is not applied outside of this bounding box.

- **ami_ols_number[i]** specifies the number of Output Layer Sets to which the decoder layer for the attenuation map of index i belongs.

- **ami_ols_id[i][j]** specifies the identifier of the Output Layer Set of index j for the attenuation map of index i. This identifier shall be used to select the Output Layer Set to output both the primary decoded picture and the Attenuation Map of index i.

- **ami_preprocessing_scale_idc[ i ]** specifies the scaling that is to be applied to the attenuation map samples of index i to get the attenuation map sample values (float) before applying them on the sample values of the decoded picture.

When this parameter is equal to 0, a scaling of $\frac{1}{255}$ should be applied. When this parameter is equal to 1, a proprietary user defined scaling should be used. This is summarized in the table below.

Table 22

| ami_preprocessing_scale_idc[ i ] | attenuation map scaling preprocess |
|---|---|
| 0 | Scaling of $\frac{1}{255}$ |
| 1 | User defined |
| 2..15 | Reserved for future uses |

In the example of Table 23, the use of ami_flags allows to reduce the size of the SEI message by not sending the metadata information that is not needed to use and apply the Attenuation Maps.

Table 23

| green_metadata( payload_size ) { | Descriptor |
|---|---|
| green_metadata_type | u(8) |
| switch ( green_metadata_type ) { | |
| case 0: | |

(continued)

| | |
|---|---|
| ... | |
| break; | |
| case 1: | |
| ... | |
| break; | |
| case 2: | |
| ami_flags | u(6) |
| if ( ami_flags && 0x01 != 0x01 ) { | |
| if ( ami_flags && 0x04 == 0x04 ) { | |
| ami_map_approximation_model | u(4) |
| } | |
| | |
| If ( ami_flags && 0x10 == 0x10 ){ | |
| ami_box_xstart | u(8) |
| ami_box_ystart | u(8) |
| ami_box_width | u(8) |
| ami_box_height | u(8) |
| } | |
| | |
| ami_map_number | u(4) |
| for ( i=0;i<ami_map_number;i++ ) { | |
| ami_layer_id[ i ] | u(8) |
| ami_ols_number[ i ] | u(4) |
| for ( j=0;j<ami_ols_number[i];j++) { | |
| ami_ols_id[ i ][ j ] | u(8) |
| } | |
| ami_comp_number[ i ] | u(4) |
| for ( j=0; j<ami_com_number [ i ];j++) { | |
| ami_comp_idc[ i ][ j ] | u(8) |
| } | |
| ami_energy_reduction_rate[ i ] | u(8) |
| ami_video_quality[ i ] | u(8) |
| ami_max_value[ i ] | u(16) |
| if ( ami_flags && 0x02 != 0x02 ) or ( i ==0 ) { | |
| ami_attenuation_use_idc[ i ] | u(4) |
| ami_attenuation_comp_idc[ i ] | u(4) |
| If ( ami_flags && 0x08 == 0x08 ){ | |
| ami_preprocessing_flag[ i ] | u(1) |
| if( ami_preprocessing_flag[ i ] ){ | |
| ami_preprocessing_type_idc[ i ] | u(2) |

(continued)

| | |
|---|---|
| } | |
| ami_preprocessing_scale[ i ] | u(8) |
| } | |
| } | |
| } | |
| } | |
| break; | |
| default: | |
| } | |
| } | |

In the example of Table 23, a single bit field named **ami_flags** is used to convey several information flags:

- bit 0: indicates that the SEI message cancels the persistence of any previous Attenuation Map Information SEI message in output order. It corresponds to the previously defined **ami_cancel_flag.**
- bit 1: indicates whether all the following information data in the message have to be redefined for each decoded auxiliary picture of type AUX_ALPHA or not. It corresponds to the previously defined **ami_global_flag.**
- bit 2: indicates whether the following Attenuation maps in the message can be used for approximating other Attenuation Maps for other reduction rates. It corresponds to a new **ami_approximation_flag.**
- bit 3: indicates whether preprocessing is required to use the following Attenuation Maps in the message. It corresponds to a new **ami_preprocessing_global_flag.**
- bit 4: indicates that the Attenuation Maps in the message shall be applied to a region of the primary video. This region is defined respectively by the x, y coordinates_of the top left corner and the width and height of the region bounding box. It corresponds to a new **ami_box _flag**. When this flag is set, ami_box_xstart, ami_box_ystart, ami_box_width, ami_box_height information are provided and define respectively the x coordinate, y coordinate, width and height of a bounding box defining the region of the decoded picture to apply the attenuation map. The attenuation map is not applied outside of this bounding box.
- bit 5-7: reserved for future use.

The ami_flags bit field is summarized in Table 24.

Table 24

| bit 5-7 | bit 4 | bit 3 | bit 2 | bit 1 | bit 0 |
|---|---|---|---|---|---|
| Future use | ami_box_flag | ami_preprocessing_ global_flag | ami_approximate flag | ami_global_flag | ami_cancel_flag |

In at least one embodiment illustrated in the example of Table 25, the quality metric is transmitted back in the SEI message. The quality metric returned back is preferably the metric requested by the receiver in the DPR request but may also be different. In this case, the receiver may decide to not apply any attenuation map and cancel the initial request to stop the transmission of the attenuation maps and related Green metadata SEI messages.

Table 25

| green_metadata( payload_size ) { | Descriptor |
|---|---|
| green_metadata_type | u(8) |
| switch ( green_metadata_type ) { | |
| case 0: | |
| ... | |
| break; | |

(continued)

| green_metadata( payload_size ) { | Descriptor |
|---|---|
| case 1: | |
| ... | |
| break; | |
| case 2: | |
| ami_flags | u(6) |
| if ( ami_flags && 0x01 != 0x01 ) { | |
| if ( ami_flags && 0x04 == 0x04 ) { | |
| ami_map_approximation_model | u(4) |
| } | |
| | |
| If ( ami_flags && 0x10 == 0x10 ){ | |
| ami_box_xstart | u(8) |
| ami_box_ystart | u(8) |
| ami_box_width | u(8) |
| ami_box_height | u(8) |
| } | |
| | |
| ami_map_number | u(4) |
| for ( i=0;i<ami_map_number;i++ ) { | |
| ami_layer_id[ i ] | u(8) |
| ami_ols_number[ i ] | u(4) |
| for ( j=0;j<ami_ols_number[i];j++) { | |
| ami_ols_id[ i ][ j ] | u(8) |
| } | |
| ami_comp_number[ i ] | u(4) |
| for ( j=0; j<ami_com_number[ i ];j++) { | |
| ami_comp_idc[ i ][ j ] | u(8) |
| } | |
| ami_energy_reduction_rate[ i ] | u(8) |
| **if ( ami_flags && 0x20 == 0x20 ){** | |
| **{** | |
| **ami_video_quality_metric[ i ]** | u(3) |
| **ami_video_quality[ i ]** | u(8) |
| **}** | |
| ami_max_value[ i ] | u(16) |
| if ( ami_flags && 0x02 != 0x02 ) or ( i ==0 ) { | |
| ami_attenuation_use_idc[ i ] | u(4) |
| ami_attenuation_comp_idc[ i ] | u(4) |
| If ( ami_flags && 0x08 == 0x08 ){ | |

(continued)

| green_metadata( payload_size ) { | Descriptor |
|---|---|
| ami_preprocessing_flag[ i ] | u(1) |
| if( ami_preprocessing_flag[ i ] ){ | |
| ami_preprocessing_type_idc[ i ] | u(2) |
| } | |
| ami_preprocessing_scale[ i ] | u(8) |
| } | |
| } | |
| } | |
| } | |
| break; | |
| default: | |
| } | |
| } | |

In such embodiment, accordingly, the ami_flags comprises an additional bit (bit #5) called ami_video_quality_flag that indicates whether the Video Quality information is present in the message, as illustrated in Table 26. The other elements are identical to the ones described above with reference to table 24.

Table 26

| bit 6-7 | bit 5 | bit 4 | bit 3 | bit 2 | bit 1 | bit 0 |
|---|---|---|---|---|---|---|
| Future use | **ami_video_quality _flag** | ami_box_flag | ami_preprocessing _global flag | ami_approximate flag | ami_global_flag | ami_canc el_flag |

The granularity of the Green metadata SEI messages can be based on time (i.e., data are signaled per period/duration of the video content), temporal layers (i.e., data are signaled per temporal layer), slice type (intra and inter slices), parts of the picture (slices, tiles). The message is transmitted at the start of an upcoming period. The next message will be transmitted at the start of the next upcoming period. Therefore, when the upcoming period is a picture or the interval up to the next I-slice, a message will be transmitted for each picture or interval, respectively. However, when the upcoming period is a specified time interval or a specified number of pictures, the associated message will be transmitted with the first picture in the time interval or with the first picture in the specified number of pictures.

In one example, it is considered that some metadata are sent globally for the full bitstream, i.e., that they are shared for all auxiliary pictures of type "attenuation map". These metadata can also be shared in a period, where the concept of period can correspond for example to a picture, an Intra period, Group of Pictures (GOP), number of pictures, time duration, and for all. The SEI message is then typically inserted per period. It is transmitted at the start of an upcoming period. The next message containing the metadata will be transmitted at the start of the next upcoming period. Therefore, when the upcoming period is a picture, a message will be transmitted for each picture. However, when the upcoming period is a specified time interval or a specified number of pictures, the associated message will be transmitted with the first picture in the time interval or with the first picture in the specified number of pictures. In another embodiment, part of the information related to the auxiliary picture of type attenuation map can be sent globally for the full bitstream (e.g., information related to the display models compatible with the use of the attenuation maps) and other information can be sent with a different periodicity, e.g., for each picture. In yet another embodiment, if the information is sent for more than one picture (e.g., at slice level, or GOP level), motion vectors corresponding to the decoded picture and included in the bitstream can be applied to the attenuation map before applying it to the decoded picture.

Attenuation maps may be carried by auxiliary pictures as defined in ISO/IEC 23002-3 Auxiliary Video Data Representations and described in Table 27. In at least one embodiment, the attenuation map is carried by an auxiliary picture of type "AUX_ALPHA". Such auxiliary picture is conventionally related to alpha plane but will be used herein to carry the pixel-wise attenuation map allowing a reduction of the energy consumption at the receiver side.

Table 27

| sdi_aux_id[ i ] | Name | Type of auxiliary pictures |
|---|---|---|
| 1 | AUX_ALPHA | Alpha plane |
| 2 | AUX_DEPTH | Depth picture |
| 3..127 | | Reserved |
| 128..255 | | Unspecified |

If sdi_aux_id[ i ] is equal to 0, the i-th layer is referred to as a primary layer. Otherwise, the i-th layer is referred to as an auxiliary layer. When sdi_aux_id[ i ] is equal to 1, the i-th layer is also referred to as an alpha auxiliary layer. When sdi_aux_id[ i ] is equal to 2, the i-th layer is also referred to as a depth auxiliary layer.

The auxiliary picture of type AUX_ALPHA is accompanied by a standardized Alpha Channel Information Supplemental Enhancement Information message (hereafter named as ACI-SEI) which contains metadata (as defined in documents ISO/IEC 23002-3 or ITU-T H.265, ITU-T H.274) that determine how to use this auxiliary picture. The ACI-SEI defines the following parameters:

-    alpha_channel_cancel_flag: when equal to 1, indicates that the ACI-SEI message cancels the persistence of any previous ACI-SEI message in output order that applies to the current layer. When equal to 0 indicates that ACI follows.
-    alpha_channel_use_idc: when equal to 0, indicates that for alpha blending purposes the decoded samples of the associated primary picture should be multiplied by the interpretation sample values of the decoded auxiliary picture in the display process after output from the decoding process. When equal to 1 indicates that for alpha blending purposes the decoded samples of the associated primary picture should not be multiplied by the interpretation sample values of the decoded auxiliary picture in the display process after output from the decoding process. When equal to 2 indicates that the usage of the auxiliary picture is unspecified. Values greater than 2 for alpha_channel_use_idc are reserved for future use by ITU-T | ISO/IEC. When not present, the value of alpha_channel_use_idc is inferred to be equal to 2. Decoders shall ignore alpha channel information SEI messages in which alpha_channel_use_idc is greater than 2.
-    alpha_channel_bit_depth_minus8 plus 8: specifies the bit depth of the samples of the luma sample array of the auxiliary picture. This parameter shall be equal to the bit depth of the associated primary picture.
-    alpha_transparent_value: specifies the interpretation sample value of a decoded auxiliary picture luma sample for which the associated luma and chroma samples of the primary coded picture are considered transparent for purposes of alpha blending. The number of bits used for the representation of the alpha_transparent_value syntax element is alpha_channel_bit_depth_minus8 + 9.
-    alpha_opaque_value specifies the interpretation sample value of a decoded auxiliary picture luma sample for which the associated luma and chroma samples of the primary coded picture are considered opaque for purposes of alpha blending. The number of bits used for the representation of the alpha_opaque_value syntax element is alpha_channel_bit_depth_minus8 + 9. A value of alpha_opaque_value that is equal to alpha_transparent_value indicates that the auxiliary coded picture is not intended for alpha blending purposes. For alpha blending purposes, alpha_opaque_value can be greater than alpha_transparent_value or it can be less than or equal to alpha_transparent_value.
-    alpha_channel_incr_flag: when equal to 0, indicates that the interpretation sample value for each decoded auxiliary picture luma sample value is equal to the decoded auxiliary picture sample value for purposes of alpha blending. When equal to 1 indicates that, for purposes of alpha blending, after decoding the auxiliary picture samples, any auxiliary picture luma sample value that is greater than Min( alpha_opaque _value, alpha_transparent_value ) should be increased by one to obtain the interpretation sample value for the auxiliary picture sample and any auxiliary picture luma sample value that is less than or equal to Min( alpha_opaque_value, alpha_transparent_value ) should be used, without alteration, as the interpretation sample value for the decoded auxiliary picture sample value. When alpha_transparent_value is equal to alpha_opaque_value or Log2( Abs( alpha_opaque_value‑ alpha_transparent_value ) ) does not have an integer value, alpha_channel_incr_flag shall be equal to 0.
-    alpha_channel_clip_flag: when equal to 0 indicates that no clipping operation is applied to obtain the interpretation sample values of the decoded auxiliary picture. When equal to 1 indicates that the interpretation sample values of the decoded auxiliary picture are altered according to the clipping process described by the alpha_channel_clip_type_flag syntax element.
-    alpha_channel_clip_type_flag: when equal to 0 indicates that, for purposes of alpha blending, after decoding the auxiliary picture samples, any auxiliary picture luma sample that is greater than ( alpha_opaque_value + alpha_transparent_value ) / 2 is set equal to Max( alpha_transparent_value, alpha_opaque_value ) to obtain the interpretation sample value for the auxiliary picture luma sample and any auxiliary picture luma sample that is less or equal than ( alpha_opaque_value + alpha_transparent_value ) / 2 is set equal to Min( alpha_transparent_value, alpha_opaque_value ) to obtain the interpretation sample value for the auxiliary picture luma sample. When equal to 1 indicates that, for purposes of alpha blending, after decoding the auxiliary picture samples, any auxiliary picture luma sample that is greater than Max( alpha_transparent_value, alpha_opaque_value ) is set equal to Max( alpha_transparent_value, alpha_opaque_value ) to obtain the interpretation sample value for the auxiliary picture luma sample and any auxiliary picture luma sample that is less than or equal to Min( alpha_transparent_value, alpha_opaque_value ) is set equal to Min( alpha_transparent_value, alpha_opaque_value ) to obtain the interpretation sample value for the auxiliary picture luma sample.

In embodiments, the alpha_channel_use_idc parameter of the ACI-SEI is set to 3. This indicates that the usage of the auxiliary picture is unspecified and that the decoder should ignore all subsequent information of the SEI. Note that when alpha_channel_use_idc equal to 2, this indicates that the usage of the auxiliary picture is also unspecified, but the decoder does not ignore all subsequent information of the SEI. Values greater than 2 for alpha_channel_use_idc are reserved for future use by ITU-T | ISO/IEC. When not present, the value of alpha_channel_use_idc is inferred to be equal to 2. Therefore, to prevent the decoder of using the alpha channel conventionally, the alpha_channel_use_idc is set equal to 3 and the other parameters of the ACI-SEI message can be set for example to the values of Table 28.

Table 28

| | |
|---|---|
| alpha_channel_use_idc | 3 |
| alpha_channel_bit_depth_minus8 | whatever value |
| alpha_transparent_value | whatever value |
| alpha_opaque_value | alpha_transparent_value |
| alpha_channel_incr_flag | 0 |
| alpha_channel_clip_flag | 0 |
| alpha_channel_clip_type_flag | no need to send |

A compliant receiver receiving such ACI-SEI message with alpha_channel_use_idc==3 will deduce that the alpha map should not be used conventionally for alpha blending purposes. Since the receiver previously sent a DPR request and obtains a DPR response of its request, it will determine that the auxiliary picture of type AUX _ALPHA should be use as an attenuation map for energy reduction purposes and will apply the map according to its request and to the Green metadata information of the DPR response.

Instead of the use of an auxiliary picture of type AUX_ALPHA, another type of auxiliary data may be used, as soon as the type fulfills the requirement to transmit the attenuation map. A dedicated method to transport the attenuation map could be used. For example, a specific type of auxiliary picture may be defined for this purpose, in addition of the types already specified in Table 27, for example identifying as "AUX_ATTENUATION".

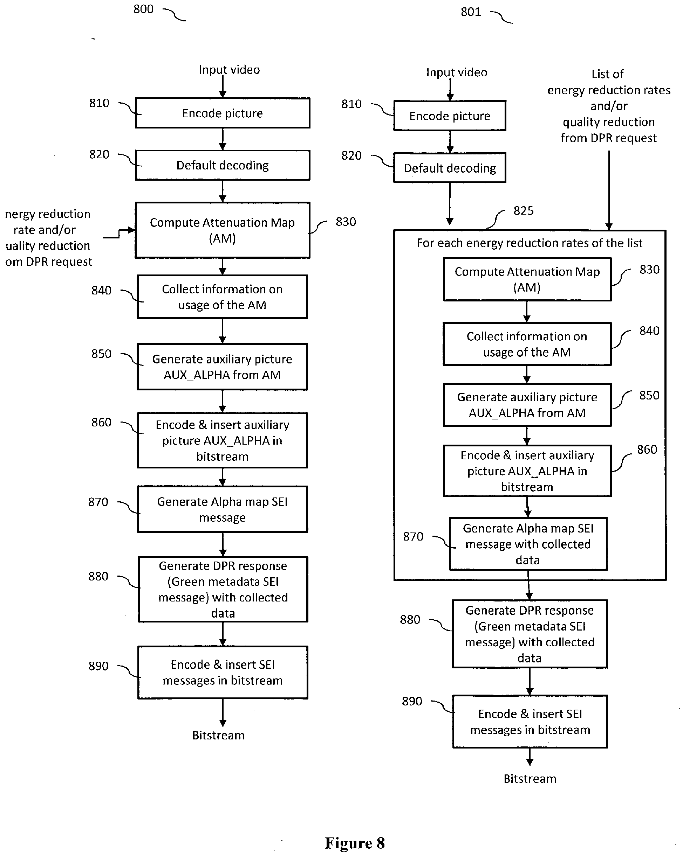

**Figure 8** illustrates flowcharts of two examples of video encoding using attenuation map information according to at least one embodiment. The encoding processes 800 and 801 are implemented for example by an encoder 100 of figure 1 or a processor 1010 in a device 1000 of figure 3. These processes build on the process of figure 7 and highlight details of the embodiments. The figure describes generation of the SEI messages and the bitstream encapsulation process according to two embodiments, performed for example during the encoding, in compliance with the syntax introduced above. In these embodiments, the SEI messages are inserted for a given picture, i.e., the considered period corresponds to one picture. Two SEI messages are generated: a first one (ACI-SEI) to indicate how to use the auxiliary picture of type AUX_ALPHA and a second one (Green metadata SEI message comprising a DPR response) providing the parameters to use the attenuation map to reduce the energy consumption. For the encoding process 800, in step 810, the device encodes the picture conventionally, resulting in a partial bitstream. In step 820, the device performs conventional partial bitstream decoding. In step 830, the device obtains a DPR request message from the receiver that comprises a selected energy reduction rate. An attenuation map corresponding to the decoded picture is then computed for a selected energy reduction rate. In step 840, data corresponding to the DPR request parameters (corresponding to the syntax of the tables described above) are collected, for example about the use of the attenuation map, the expected energy reduction, the corresponding expected quality, the pre-processing operation, etc. In step 850, the auxiliary picture of type AUX_ALPHA corresponding to the attenuation map is generated, encoded, and inserted in the partial bitstream in step 860. In step 870, the ACI-SEI message is generated, for example according to the parameter values of Table 28. Once all response data are collected, in step 880, they are inserted in the DPR response message, for example according to the syntax of Table 19 or Table 20. The SEI messages are encoded and inserted in the final bitstream in step 890.

In variant embodiments, the ordering of some of the steps may be altered, still relying on the same principles. For example, all the encoding steps may be performed in the same step. In another example, step 840 is done between steps 870 and 880.

As introduced earlier, this bitstream comprises at least an image of the video and in relation with this image, an attenuation map that corresponds to a selected energy reduction rate. This allows a decoding device (or a display device) to determine from this bitstream an image of the video that will allow a reduction of the energy consumption when displaying the video.

In at least one embodiment, the DPR request comprises multiple energy reduction rates so that several attenuation maps need to be computed. For example, two attenuation maps with energy reduction rates $R_1$ and $R_2$ may be requested by the receiver. The process 801 of figure 8 illustrates a flowchart of such embodiment. Most of the steps are identical to the steps of the process 800. The difference is related to the iteration 825 that is done for a selected set of energy reduction rates obtained from the DPR request message, for example according to the syntax of Table 6. Thus, an attenuation map is generated for each of the energy reduction rates and the set of corresponding auxiliary pictures with their accompanying informative data are inserted into the bitstream.

As a result of this embodiment, the bitstream comprises at least an image of the video and in relation with this image, a set of different attenuation maps that correspond to a set of selected energy reduction rates. This allows a decoding device (or a display device) to determine from this bitstream an image of the video that will allow a reduction of the energy consumption when displaying the video according to an energy reduction rate not in the list of reduction rates, thanks to the plurality of attention maps and parameters in the SEI message of the bitstream.

Again, the ordering of some of the steps can be changed while still being based on the same principles. For example, all auxiliary pictures may be inserted at once, outside of the loop on energy reduction rates. Another example consists of inserting an SEI message per auxiliary picture, i.e., inside the loop on energy reduction rates.

In another embodiment, the computation of the attenuation map and the collection of the associated metadata is realized outside of the encoder, for example in a dedicated device and these data are for example stored in a database accessible by the encoder. These additional data are then provided to the encoder together with the input video similar to the processes 800 and 801.

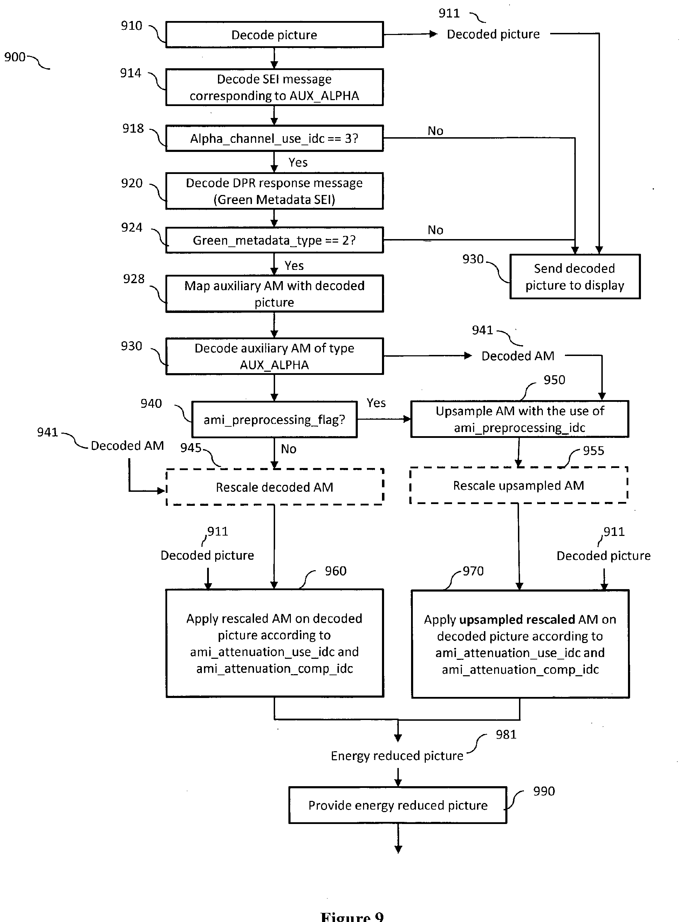

**Figure 9** illustrates a flowchart of an example of video decoding using attenuation map information according to at least one embodiment. This decoding process 900 is implemented for example by a decoder 200 of figure 1, by a processor 1010 in a device 1000 of figure 3 or by various electronic devices such as smartphones, tablet computers, digital multimedia set top boxes, digital television receivers, personal video recording systems, connected home appliances, personal computers, laptop computers, and servers. This process builds on the process of figure 6 and highlights details of the embodiments. The process 900 can be applied to a picture or to a group of pictures or to a part of a picture (slice, tile), according to the level of signaling of the SEI message as described above. The following description illustrates the case where the process is applied to a single picture of the visual content and there is only one attenuation map, but the other cases are similar and based on the same steps.

In step 910, the picture is decoded from the bitstream, producing a decoded picture 911. In step 914, the ACI-SEI message (i.e., the SEI message corresponding to the auxiliary picture of type AUX_ALPHA as described in Table 28) is obtained and decoded from the bitstream for the decoded picture. In step 918, the process verifies that the parameter alpha_channel_use_idc is equal to 3. If it is not the case (branch "No"), then the process jumps to step 930, and the decoding may be done conventionally without using an attenuation map. Else, the DPR response is obtained and decoded in step 920. In step 924, the process verifies that the parameter green_metadata_type is equal to 2. If it is not the case (branch "No"), then the process jumps to step 930, and the decoding may be done conventionally without using an attenuation map. Else, in step 928, a mapping with the auxiliary data of type AUX_ALPHA and its corresponding decoded picture is done by the use of ami_ols_id[ i ][ j ] which gives the identifiers of the layers, within the bitstream, containing the decoded picture and the attenuation map. Within these identifiers, ami_layer_ id[i] will give the layer id in which the attenuation map is. In step 930, the auxiliary data of type AUX_ALPHA corresponding to the picture is decoded, producing a decoded attenuation map 941. In step 940, ami_preprocessing_flag is checked to get the information whether some upsampling should be applied to the decoded attenuation map 941. In step 950, in case some upsampling is to be applied, the decoded attenuation map 941 is upsampled according to the process given by the parameter ami_preprocessing_idc. In step 955, it is further rescaled according to some scaling factor described by ami_preprocessing_scale_idc and ami_max_value. Then, in step 970, the upsampled and rescaled attenuation map is applied on the decoded picture according to the process described by ami_attenuation_use_idc and ami_attenuation_comp_idc to produce a reduced image 981 that is further sent to the display in step 990. In case no upsampling of the attenuation map 941 is required, it is first rescaled according to some scaling factor described by ami_preprocessing_scale_idc and ami_max_value in step 945. Then, the rescaled attenuation map is applied on the decoded picture in step 960 according to the process described by ami_attenuation_use_idc and ami_attenuation_comp_idc to produce a reduced image 981 that is further sent to the display in step 990.

In the case where multiple energy reduction rates were requested in the DPR request message, the DPR response message may contain metadata related to multiple energy reductions rates. The device selects one of them amongst the list, for example based on user preference or on highest reduction rate and uses the associated metadata and attenuation map.

In at least one embodiment, the use of the attenuation map is disabled if the expected quality for the end device is higher than the quality given by ami_video_quality.

In at least one embodiment, in case a single attenuation map is provided, a given energy reduction rate $R$ (i.e., corresponding to an expected Energy Reduction Rate) is checked against the ami_energy_reduction_rate provided in the SEI message. If this rate corresponds to the ami_energy_reduction_rate of the transmitted attenuation map, the corresponding attenuation map is applied to the decoded picture. If the energy reduction rate $R$ is lower than the transmitted ami_energy_reduction_rate, a new attenuation map corresponding to $R$ is inferred by extrapolating this new attenuation map from the transmitted attenuation map according to the process described by ami_map_approximation_model. An example of such a process can be a simple linear scaling of the attenuation map.

In at least one embodiment, if two attenuation maps are provided for two different ami_energy_reduction_rates $R_1$ and $R_2$, a given energy reduction rate $R$ is checked against rates $R_1$ and $R_2$. If this rate corresponds to one of rates $R_1$ and $R_2$, the corresponding processed attenuation map (as described in the previous embodiment) is applied on the decoded picture. If the energy reduction rate $R$ is such that that $R_1 < R < R_2$, a new attenuation map corresponding to $R$ is inferred by extrapolating this new attenuation map from the decoded attenuation maps corresponding to $R_1$ and $R_2$ according to the process described by ami_map_approximation_model. An example of such a process can be a pixel wise linear or a bicubic interpolation between the two attenuation maps corresponding to $R_1$ and $R_2$. If $R$ is bigger than both $R_1$ and $R_2$, some interpolation process on the attenuation map by linear scaling from the largest energy reduction rate can also be envisioned, but with no warranty on the resulting quality of the reduced picture. This embodiment is easily extended to more than two transmitted attenuation maps.

In at least one embodiment, the use of the attenuation map is disabled for some content pictures depending on: the image category (e.g., sport images, gaming images, etc.), the display settings (e.g., cinema mode, etc.), etc.

In at least one embodiment, the method is disabled for some specific content for which the energy reduction will not be significant. For example, dark content would lead to very low energy reduction whatever the technique. In this embodiment, the total amount of luminance per picture is computed and, when lower than a given threshold, the energy reduction method is disabled. Alternatively, this might be disabled per GOP, per shot, per movie.

In at least one embodiment, an additional check is added to verify that a pixel spatially belongs to a subset of the image that we want to process, for example belonging to a region where the energy reduction is not desired. Such a region or mask can be based on, for example, a spatio-temporal just noticeable difference (JND) map, a motion field, a saliency map, a gaze tracking information or other pixel-wise information. When a pixel does not belong to this region or mask, the attenuation map is not applied to this pixel. This check can be done before or after the upsampling if any of the attenuation map.

In the case where some post-processing is applied on the decoded picture, such post-processing should be taken into account before applying the attenuation map. Two embodiments are possible. In at least one embodiment, some post-processing operations are taken into account while building the attenuation map. For example, this may be done in the process 400 by introducing an additional step between steps 420 and 430 to add a post processing operation on the decoded picture before building the attenuation map. In this case, at the receiver side, the attenuation map should be applied after all the post-processing operations. In at least one embodiment, these post-processing intervene independently of the encoding-decoding process and in this case, the attenuation map should be adapted to take these post-processing into account, before applying it on the decoded and post processed picture.

In the case where the attenuation map was computed on an input image in a given color gamut, the decoded picture should be converted to this color gamut before applying the attenuation map. At least one embodiment further comprises checking that the color gamut of the decoded picture corresponds to the color gamut while computing the attenuation map. This can be done by sending the color gamut of the attenuation map's computation together with the metadata.

For transmissive pixel displays, such as backlight displays for example, the attenuation map cannot be applied directly. However, it is possible to use the attenuation map to provide guidance to a backlight scaling algorithm. Indeed, for backlight displays, a strong contributor to the energy consumption of the display is the backlight.

In at least one embodiment, an attenuation map is applied on transmissive pixels displays by determining the minimal value, average value, or any other global value from the attenuation map and using this information to guide the backlight of the transmissive pixels displays. In the particular case of local dimming displays where the backlighting is split into different regions, the attenuation map could be previously split in regions corresponding to the local dimming regions of the display, before determining the minimal value, average value, or any other global value from the attenuation map and using this information to guide the backlight.

In at least one embodiment, the following steps are implemented. They correspond to ami_backlight_scaling_idc equal to 0. Apply the attenuation map to the image and determine the maximum luminance (or luma) values before and after applying the attenuation map. The ratio between these maxima determines the percentage by which the backlight can be dimmed. The image to which the attenuation map is applied is then rescaled to its original value and is then used to set the pixel values of the LED panel. This later form of backlight scaling allows either a stronger reduction of energy or a smaller reduction in visual quality than conventional backlight scaling methods, due to the non-linear nature of the attenuation map. If the backlight consists of an LED array, or of a tiled backlight, then the above method could be applied to sections of the back panel individually.

At least one example of an embodiment can involve a device including an apparatus as described herein and at least one of (i) an antenna configured to receive a signal, the signal including data representative of the image information, (ii) a band limiter configured to limit the received signal to a band of frequencies that includes the data representative of the image information, and (iii) a display configured to display an image from the image information.

At least one example of an embodiment can involve a device as described herein, wherein the device comprises one of a television, a television signal receiver, a set-top box, a gateway device, a mobile device, a cell phone, a tablet, a computer, a laptop, or other electronic device.

In general, another example of an embodiment can involve a bitstream or signal formatted to include syntax elements and picture information, wherein the syntax elements are produced, and the picture information is encoded by processing based on any one or more of the examples of embodiments of methods in accordance with the present disclosure.

In general, one or more other examples of embodiments can also provide a computer readable storage medium, e.g., a non-volatile computer readable storage medium, having stored thereon instructions for encoding or decoding picture information such as video data according to the methods or the apparatus described herein. One or more embodiments can also provide a computer readable storage medium having stored thereon a bitstream generated according to methods or apparatus described herein. One or more embodiments can also provide methods and apparatus for transmitting or receiving a bitstream or signal generated according to methods or apparatus described herein.

Many of the examples of embodiments described herein are described with specificity and, at least to show the individual characteristics, are often described in a manner that may sound limiting. However, this is for purposes of clarity in description, and does not limit the application or scope of those aspects. Indeed, all of the different aspects can be combined and interchanged to provide further aspects. Moreover, the embodiments, features, etc. can be combined and interchanged with others described in earlier filings as well.

Various implementations involve decoding. "Decoding", as used in this application, can encompass all or part of the processes performed, for example, on a received encoded sequence in order to produce a final output suitable for display. In various embodiments, such processes include one or more of the processes typically performed by a decoder, for example, entropy decoding, inverse quantization, inverse transformation, and differential decoding. In various embodiments, such processes also, or alternatively, include processes performed by a decoder of various implementations described in this application.

As further examples, in one embodiment "decoding" refers only to entropy decoding, in another embodiment "decoding" refers only to differential decoding, and in another embodiment "decoding" refers to a combination of entropy decoding and differential decoding. Whether the phrase "decoding process" is intended to refer specifically to a subset of operations or generally to the broader decoding process will be clear based on the context of the specific descriptions and is believed to be well understood by those skilled in the art.

Various implementations involve encoding. In an analogous way to the above discussion about "decoding", "encoding" as used in this application can encompass all or part of the processes performed, for example, on an input video sequence in order to produce an encoded bitstream. In various embodiments, such processes include one or more of the processes typically performed by an encoder, for example, partitioning, differential encoding, transformation, quantization, and entropy encoding.

As further examples, in one embodiment "encoding" refers only to entropy encoding, in another embodiment "encoding" refers only to differential encoding, and in another embodiment "encoding" refers to a combination of differential encoding and entropy encoding. Whether the phrase "encoding process" is intended to refer specifically to a subset of operations or generally to the broader encoding process will be clear based on the context of the specific descriptions and is believed to be well understood by those skilled in the art.

Note that the syntax elements as used herein are descriptive terms. As such, they do not preclude the use of other syntax element names.

When a figure is presented as a flow diagram, it should be understood that it also provides a block diagram of a corresponding apparatus. Similarly, when a figure is presented as a block diagram, it should be understood that it also provides a flow diagram of a corresponding method/process.

In general, the examples of embodiments, implementations, features, etc., described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. One or more examples of methods can be implemented in, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users. Also, use of the term "processor" herein is intended to broadly encompass various configurations of one processor or more than one processor.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this application are not necessarily all referring to the same embodiment.

Additionally, this application may refer to "determining" various pieces of information. Determining the information can include one or more of, for example, estimating the information, calculating the information, predicting the information, or retrieving the information from memory.

Further, this application may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

As will be evident to one of ordinary skill in the art, implementations can produce a variety of signals formatted to carry information that can be, for example, stored or transmitted. The information can include, for example, instructions for performing a method, or data produced by one of the described implementations. For example, a signal can be formatted to carry the bitstream of a described embodiment. Such a signal can be formatted, for example, as an electromagnetic wave (for example, using a radio frequency portion of spectrum) or as a baseband signal. The formatting can include, for example, encoding a data stream and modulating a carrier with the encoded data stream. The information that the signal carries can be, for example, analog or digital information. The signal can be transmitted over a variety of different wired or wireless links, as is known. The signal can be stored on a processor-readable medium.

Various embodiments are described herein. Features of these embodiments can be provided alone or in any combination, across various claim categories and types.

**Claims**

1. A method comprising:

   - obtaining an energy reduction event;
   - transmitting a display power reduction request message comprising at least an energy reduction rate or quality reduction rate corresponding to the energy reduction event;
   - obtaining a display power reduction response message acknowledging the request, the message comprising at least a parameter representing the quality metric;
   - obtaining encoded data comprising at least an image, an attenuation map and a set of parameters;
   - reducing values of components of the image by decoding the image and applying the attenuation map to the decoded image based on the set of parameters; and
   - providing the modified image;

wherein the display power reduction request message, the display power reduction response message and the set of parameters are formatted according to a MPEG green metadata SEI message.

2. The method of claim 1, wherein the set of parameters is carried by supplemental enhancement message according to a format specified in ISO/IEC 23001-11, and the attenuation map is carried by an auxiliary picture according to the format specified in ISO/IEC 23002-3 and ISO/IEC 14496-10 or ISO/IEC DIS 23008-2 or ISO/IEC FDIS 23002-7.

3. The method of any of claims 1 or 2 wherein the auxiliary picture carrying the attenuation map is an auxiliary picture for alpha blending.

4. A method comprising:

   - obtaining a display power reduction request message comprising a set of parameters, the parameters comprising at least an energy reduction rate or quality reduction rate;
   - obtaining an input image of a video;
   - determining an attenuation map based on the input image according to the obtained energy reduction rate or quality reduction rate, wherein applying the attenuation map to the input image reduces values of components of the input image;
   - transmitting a display power reduction response message to acknowledge the request, the message comprising at least a parameter representing the quality metric, and
   - generating an encoded video comprising at least the input image, the attenuation map and a second set of parameters, wherein the second set of parameters comprises at least a parameter representative of the energy reduction rate or the quality reduction rate;

   wherein the display power reduction request message, the display power reduction response message and the set of parameters are formatted according to a MPEG green metadata SEI message.

5. The method of claim 4, wherein the set of parameters is carried by supplemental enhancement message according to a format specified in ISO/IEC 23001-11 and the attenuation map is carried by an auxiliary picture according to the format specified in ISO/IEC 23002-3 and ISO/IEC 14496-10 or ISO/IEC DIS 23008-2 or ISO/IEC FDIS 23002-7.

6. The method of any of claims 4 or 5, wherein the auxiliary picture carrying the attenuation map is an auxiliary picture for alpha blending.

7. An apparatus comprising a processor configured to:

   - obtain an energy reduction event;
   - transmit a display power reduction request message comprising at least an energy reduction rate or quality reduction rate corresponding to the energy reduction event;
   - obtain a display power reduction response message acknowledging the request, the message comprising at least a parameter representing the quality metric;
   - obtain encoded data comprising at least an image, an attenuation map and a set of parameters;
   - reduce values of components of the image by decoding the image and applying the attenuation map to the decoded image based on the set of parameters; and
   - provide the modified image;

   wherein the display power reduction request message, the display power reduction response message and the set of parameters are formatted according to a MPEG green metadata SEI message.

8. The apparatus of claim 7, wherein the set of parameters is carried by supplemental enhancement message according to a format specified in ISO/IEC 23001-11, and the attenuation map is carried by an auxiliary picture according to the format specified in ISO/IEC 23002-3 and ISO/IEC 14496-10 or ISO/IEC DIS 23008-2 or ISO/IEC FDIS 23002-7.

9. The apparatus of any of claims 7 or 8 wherein the auxiliary picture carrying the attenuation map is an auxiliary picture for alpha blending.

10. The apparatus of any of claims 7 to 9, wherein the apparatus is one of a television, a television signal receiver, a set-top box, a gateway device, a mobile device, a cell phone, a tablet, a computer, a laptop, or other electronic device.

11. An apparatus comprising a processor configured to:

- obtain a display power reduction request message comprising a set of parameters, the parameters comprising at least an energy reduction rate or quality reduction rate;
- obtain an input image of a video;
- determine an attenuation map based on the input image according to the obtained energy reduction rate or quality reduction rate, wherein applying the attenuation map to the input image reduces values of components of the input image;
- transmit a display power reduction response message to acknowledge the request, the message comprising at least a parameter representing the quality metric, and
- generate an encoded video comprising at least the input image, the attenuation map and a second set of parameters, wherein the second set of parameters comprises at least a parameter representative of the energy reduction rate or the quality reduction rate;

wherein the display power reduction request message, the display power reduction response message and the set of parameters are formatted according to a MPEG green metadata SEI message.

12. The apparatus of claim 11, wherein the set of parameters is carried by supplemental enhancement message according to a format specified in ISO/IEC 23001-11 and the attenuation map is carried by an auxiliary picture according to the format specified in ISO/IEC 23002-3 and ISO/IEC 14496-10 or ISO/IEC DIS 23008-2 or ISO/IEC FDIS 23002-7.

13. The method of any of claims 11 or 12, wherein the auxiliary picture carrying the attenuation map is an auxiliary picture for alpha blending.

14. A computer program comprising instructions, which, when executed by a computer, cause the computer to carry out the method according to any of claims 1 to 6.

15. A non-transitory computer readable medium storing executable program instructions to cause a computer executing the instructions to perform a method according to any of claims 1 to 6.

Figure 1

**Figure 2**

**Figure 3**

EP 4 637 162 A1

**Figure 4**

**Figure 5**

600

Input video

602 → obtain picture of video

604 → decode picture of video

606 → provide picture of video

610 → detect Energy Reduction event

611

No Energy Reduction Event

612 → Event = Change Energy Reduction

620 → obtain Energy Reduction parameters

622 → Send DPR request

624 → ACK?

626 → obtain and decode picture of video

628 → obtain GM-SEI and AM

630 → apply AM on decoded picture

632 → provide modified picture of video

640 → detect Energy Reduction event

641

No Energy Reduction Event

642 Event = Change Energy Reduction

Event = Cancel Energy Reduction    643

650 → Send DPR cancel request

652 → ACK?

**Figure 6**

700

Input video

702 — encode and provide video

710 — receive DPR request

711 — No DPR request

712
DPR = Change Energy Reduction

720 — obtain Energy Reduction parameters

730 — Send ACK

740 — Determine AM and GM-SEI

750 — encode and provide video + AM + GM-SEI

760 — DPR request ?

761 — No DPR request

762
New DPR request

763 — DPR Cancel request

780 — Send ACK

**Figure 7**

800

801

Input video

Input video

List of
energy reduction rates
and/or
quality reduction
from DPR request

810 — Encode picture

810 — Encode picture

820 — Default decoding

820 — Default decoding

nergy reduction
rate and/or
uality reduction
om DPR request

Compute Attenuation Map
(AM) — 830

825

For each energy reduction rates of the list

840 — Collect information on
usage of the AM

Compute Attenuation Map
(AM) — 830

850 — Generate auxiliary picture
AUX_ALPHA from AM

Collect information on
usage of the AM — 840

860 — Encode & insert auxiliary
picture AUX_ALPHA in
bitstream

Generate auxiliary picture
AUX_ALPHA from AM — 850

870 — Generate Alpha map SEI
message

Encode & insert auxiliary
picture AUX_ALPHA in
bitstream — 860

880 — Generate DPR response
(Green metadata SEI
message) with collected
data

870 — Generate Alpha map SEI
message with collected
data

890 — Encode & insert SEI
messages in bitstream

880 — Generate DPR response
(Green metadata SEI
message) with collected
data

Bitstream

890 — Encode & insert SEI
messages in bitstream

Bitstream

**Figure 8**

900

910 — Decode picture

911 — Decoded picture

914 — Decode SEI message corresponding to AUX_ALPHA

918 — Alpha_channel_use_idc == 3? — No

Yes

920 — Decode DPR response message (Green Metadata SEI)

924 — Green_metadata_type == 2? — No

Yes

930 — Send decoded picture to display

928 — Map auxiliary AM with decoded picture

930 — Decode auxiliary AM of type AUX_ALPHA

941 — Decoded AM

940 — ami_preprocessing_flag? — Yes — 950 — Upsample AM with the use of ami_preprocessing_idc

941 — Decoded AM

No

945 — Rescale decoded AM

955 — Rescale upsampled AM

911 — Decoded picture

960 — Apply rescaled AM on decoded picture according to ami_attenuation_use_idc and ami_attenuation_comp_idc

911 — Decoded picture

970 — Apply **upsampled rescaled** AM on decoded picture according to ami_attenuation_use_idc and ami_attenuation_comp_idc

981 — Energy reduced picture

990 — Provide energy reduced picture

Figure 9

Europäisches
Patentamt

European
Patent Office

Office européen
des brevets

## EUROPEAN SEARCH REPORT

**Application Number**

EP 24 31 5182

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | HERGLOTZ C ET AL: "Proposed update of Green MPEG on Complexity metrics for decoder-power reduction for VVC", 136. MPEG MEETING; 20211011 - 20211015; ONLINE; (MOTION PICTURE EXPERT GROUP OR ISO/IEC JTC1/SC29/WG11), , no. m57976 14 October 2021 (2021-10-14), XP030298600, Retrieved from the Internet: URL:https://dms.mpeg.expert/doc_end_user/documents/136_OnLine/wg11/m57976-v2-m57976_greenMpeg_CMsForDecPowerReduc_v2.zip modified_WD_ISO_IEC_23001_11_3rdEdition_r1.docx [retrieved on 2021-10-14] * pages 80-81 * | 1-15 | INV. H04N21/2343 H04N21/443 H04N21/6379 H04N21/84 |
| | ----- | | |
| Y | LE MEUR (INTERDIGITAL) O ET AL: "AHG9: Attenuation Map Information SEI for reducing energy consumption of displays", 30. JVET MEETING; 20230421 - 20230428; ANTALYA; (THE JOINT VIDEO EXPLORATION TEAM OF ISO/IEC JTC1/SC29/WG11 AND ITU-T SG.16 ), , no. JVET-AD0121 ; m62762 14 April 2023 (2023-04-14), XP030308770, Retrieved from the Internet: URL:https://jvet-experts.org/doc_end_user/documents/30_Antalya/wg11/JVET-AD0121-v1.zip JVET-AD0121-v1.docx [retrieved on 2023-04-14] * the whole document * | 1-15 | TECHNICAL FIELDS SEARCHED (IPC) H04N |
| | ----- | | |
| | -/-- | | |

The present search report has been drawn up for all claims

| Place of search | Date of completion of the search | Examiner |
|---|---|---|
| The Hague | 4 September 2024 | Troya Chinchilla, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................................
& : member of the same patent family, corresponding document

EPO FORM 1503 03.82 (P04C01)

page 1 of 2

| | Europäisches Patentamt European Patent Office Office européen des brevets | **EUROPEAN SEARCH REPORT** | **Application Number** EP 24 31 5182 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | C-H DEMARTY (INTERDIGITAL) ET AL: "AHG9: Attenuation Map Information SEI for reducing energy consumption of displays", 29. JVET MEETING; 20230111 - 20230120; TELECONFERENCE; (THE JOINT VIDEO EXPLORATION TEAM OF ISO/IEC JTC1/SC29/WG11 AND ITU-T SG.16 ), , no. JVET-AC0122 ; m61700 13 January 2023 (2023-01-13), XP030306682, Retrieved from the Internet: URL:https://jvet-experts.org/doc_end_user/documents/29_Teleconference/wg11/JVET-AC0122-v4.zip 2023-01-AttenuationMap-v2.docx [retrieved on 2023-01-13] * the whole document * ----- | 1-15 | |
| | | | **TECHNICAL FIELDS SEARCHED (IPC)** |

The present search report has been drawn up for all claims

| Place of search | Date of completion of the search | Examiner |
|---|---|---|
| The Hague | 4 September 2024 | Troya Chinchilla, A |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
...........................................................................
& : member of the same patent family, corresponding
    document

EPO FORM 1503 03.82 (P04C01)